# EUROPEAN PATENT APPLICATION

(11) **EP 4 757 267 A1**
(43) Date of publication of application: **10.06.2026**
(21) Application number: 24848272.1
(22) Date of filing: 30.07.2024
(51) Int. Cl.: H04L 41/16

(54) **AI SERVICE RELEASING METHOD AND DEVICE**

(30) Priority: 02.08.2023 CN 202310968237
(71) Applicant: Vivo Mobile Communication Co., Ltd., Dongguan, Guangdong 523863 (CN)
(72) Inventor: YU, Hang, Dongguan, Guangdong 523863 (CN); KANG, Yanchao, Dongguan, Guangdong 523863 (CN)
(74) Representative: Walaski, Jan Filip
(86) International application number: PCT/CN2024/108533
(87) International publication number: WO 2025/026317

(57) **Abstract**

The present application relates to the technical field of communications, and discloses an AI service releasing method and a device. The AI service releasing method in embodiments of the present application comprises: a first device receives a first release request message sent by a second device, the first release request message being used for requesting to release a service resource associated with an AI service; the first device sends a first release response message to the second device, the first release response message being used for indicating whether the service resource associated with the AI service is successfully released; and the first device executes at least one of the following operations on the basis of the first release response message: determining at least one of a third device, a fourth device, and a fifth device which are associated with the AI service; sending a second release request message to the third device, the second release request message being used for requesting to release an AI resource allocated for the AI service; sending a third release request message to the fourth device, the third release request message being used for requesting to release a communication resource allocated for the AI service; and sending a fourth release request message to the third device, the fourth device, or the fifth device, the fourth release request message being used for requesting to release a service resource associated with the AI service.

## Description

### CROSS-REFERENCE TO RELATED APPLICATIONS

This application claims priority to Chinese Patent Application No. 202310968237.8, filed in China on August 2, 2023, which is incorporated herein by reference in its entirety.

### TECHNICAL FIELD

This application pertains to the field of communication technologies, and specifically, relates to an AI service release method and a device.

### BACKGROUND

Artificial intelligence (Artificial Intelligence, AI) is to enable, by using a large amount of data and model training, an intelligent machine to perform thinking and determining like a human being, and research of artificial intelligence includes fields of robots, language recognition, image recognition, natural languages, and the like. With continuous integration of computing and communication, AI is increasingly favored in the communication field as one of mainstream technologies of computers in the future.

A design using a session as a unit is usually used in a current communication system. With deepening of AI research, an architectural design using an AI service as a unit is expected to be introduced in a future communication system. In other words, the communication system provides a required communication resource and computing resource for the AI service. Due to limited communication resources and computing resources, if the resources cannot be properly released in a timely manner after a task ends, great pressure may be posed on network resource management, and requirements of a large quantity of subsequent AI services cannot be met. Therefore, how to release an AI service is a problem to be resolved by a person skilled in the art.

### SUMMARY

Embodiments of this application provide an AI service release method and a device, to resolve a problem of how to release an AI service.

According to a first aspect, an AI service release method is provided, including:
receiving, by a first device, a first release request message sent by a second device, where the first release request message is used to request to release a service resource associated with an artificial intelligence AI service;
sending, by the first device, a first release response message to the second device, where the first release response message is used to indicate whether the service resource associated with the AI service is successfully released; and
performing, by the first device, at least one of the following operations based on the first release request message:
   determining at least one of a third device, a fourth device, and a fifth device associated with the AI service;
   sending a second release request message to the third device, where the second release request message is used to request to release an AI resource allocated to the AI service;
   sending a third release request message to the fourth device, where the third release request message is used to request to release a communication resource allocated to the AI service; and
   sending a fourth release request message to the third device, the fourth device, or the fifth device, where the fourth release request message is used to request the third device, the fourth device, or the fifth device to release the service resource associated with the AI service.

According to a second aspect, an AI service release method is provided, including:
sending, by a second device, a first release request message to a first device, where the first release request message is used to request to release a service resource associated with an AI service; and
receiving, by the second device, a first release response message sent by the first device, where the first release response message is used to indicate whether the service resource associated with the AI service is successfully released.

According to a third aspect, an AI service release method is provided, including:
receiving, by a third device, a second release request message sent by a first device, where the second release request message is used to request the third device to release an AI resource allocated to an AI service; and
sending, by the third device, a second release response message to the first device, where the second release response message is used to indicate whether the AI resource is successfully released;
   or
receiving, by a third device, a fourth release request message sent by a first device, where the fourth release request message is used to request the third device to release a service resource associated with an AI service; and
sending, by the third device, a fourth release response message to the first device, where the fourth release response message is used to indicate whether the third device successfully releases the service resource associated with the AI service.

According to a fourth aspect, an AI service release method is provided, including:
receiving, by a fourth device, a third release request message sent by a first device, where the third release request message is used by the fourth device to release a communication resource allocated to an AI service; and
sending, by the fourth device, a third release response message to the first device, where the third release response message is used to indicate whether the communication resource is successfully released;
   or
receiving, by a fourth device, a fourth release request message sent by a first device, where the fourth release request message is used to request the fourth device to release a service resource associated with an AI service; and
sending, by the fourth device, a fourth release response message to the first device, where the fourth release response message is used to indicate whether the fourth device successfully releases the service resource associated with the AI service.

According to a fifth aspect, an AI service release method is provided, including:
receiving, by a fifth device, a fourth release request message sent by a first device, where the fourth release request message is used to request the fifth device to release a service resource associated with an AI service; and
sending, by the fifth device, a fourth release response message to the first device, where the fourth release response message is used to indicate whether the fifth device successfully releases the service resource associated with the AI service.

According to a sixth aspect, an AI service release method is provided, including:
receiving, by a seventh device, a seventh release request message sent by a third device, where the seventh release request message is used to request to release an AI resource allocated to an AI service, and the seventh release request message includes at least one of the following: an AI resource management function address, an AI session information, and an AI service information; and
sending, by the seventh device, a seventh release response message to the third device, where the seventh release response message is used to indicate whether the AI resource is successfully released.

According to a seventh aspect, an AI service release apparatus is provided, including:
a receiving module, configured to receive a first release request message sent by a second device, where the first release request message is used to request to release a service resource associated with an artificial intelligence AI service;
a sending module, configured to send a first release response message to the second device, where the first release response message is used to indicate whether the service resource associated with the AI service is successfully released; and
an execution module, configured to perform at least one of the following operations based on the first release request message:
   determining at least one of a third device, a fourth device, and a fifth device associated with the AI service;
   sending a second release request message to the third device, where the second release request message is used to request to release an AI resource allocated to the AI service;
   sending a third release request message to the fourth device, where the third release request message is used to request to release a communication resource allocated to the AI service; and
   sending a fourth release request message to the third device, the fourth device, or the fifth device, where the fourth release request message is used to request the third device, the fourth device, or the fifth device to release the service resource associated with the AI service.

According to an eighth aspect, an AI service release apparatus is provided, including:
a sending module, configured to send a first release request message to a first device, where the first release request message is used to request to release a service resource associated with an AI service; and
a receiving module, configured to receive a first release response message sent by the first device, where the first release response message is used to indicate whether the service resource associated with the AI service is successfully released.

According to a ninth aspect, an AI service release apparatus is provided, including:
a receiving module, configured to receive a second release request message sent by a first device, where the second release request message is used to request a third device to release an AI resource allocated to an AI service; and
a sending module, configured to send a second release response message to the first device, where the second release response message is used to indicate whether the AI resource is successfully released;
   or
the receiving module, configured to receive a fourth release request message sent by a first device, where the fourth release request message is used to request a third device to release a service resource associated with an AI service; and
the sending module, configured to send a fourth release response message to the first device, where the fourth release response message is used to indicate whether the third device successfully releases the service resource associated with the AI service.

According to a tenth aspect, an AI service release apparatus is provided, including:
a receiving module, configured to receive a third release request message sent by a first device, where the third release request message is used by a fourth device to release a communication resource allocated to an AI service; and
a sending module, configured to send a third release response message to the first device, where the third release response message is used to indicate whether the communication resource is successfully released;
   or
the receiving module, configured to receive a fourth release request message sent by a first device, where the fourth release request message is used to request a fourth device to release a service resource associated with an AI service; and
the sending module, configured to send a fourth release response message to the first device, where the fourth release response message is used to indicate whether the fourth device successfully releases the service resource associated with the AI service.

According to an eleventh aspect, an AI service release apparatus is provided, including:
a receiving module, configured to receive a fourth release request message sent by a first device, where the fourth release request message is used to request a fifth device to release a service resource associated with the AI service; and
a sending module, configured to send a fourth release response message to the first device, where the fourth release response message is used to indicate whether the fifth device successfully releases the service resource associated with the AI service.

According to a twelfth aspect, an AI service release apparatus is provided, including:
a receiving module, configured to receive a seventh release request message sent by a third device, where the seventh release request message is used to request to release an AI resource allocated to an AI service, and the seventh release request message includes at least one of the following: an AI resource management function address, an AI session information, and an AI service information; and
a sending module, configured to send a seventh release response message to the third device, where the seventh release response message is used to indicate whether the AI resource is successfully released.

According to a thirteenth aspect, a first device is provided. The first device includes a processor and a memory. The memory stores a program or instructions capable of being run on the processor, and when the program or the instructions are executed by the processor, the steps of the method according to the first aspect are implemented.

According to a fourteenth aspect, a first device is provided, including a processor and a communication interface. The communication interface is configured to: receive a first release request message sent by a second device, where the first release request message is used to request to release a service resource associated with an artificial intelligence AI service; send a first release response message to the second device, where the first release response message is used to indicate whether the service resource associated with the AI service is successfully released. The processor is configured to perform at least one of the following operations based on the first release request message:
determining at least one of a third device, a fourth device, and a fifth device associated with the AI service;
sending a second release request message to the third device, where the second release request message is used to request to release an AI resource allocated to the AI service;
sending a third release request message to the fourth device, where the third release request message is used to request to release a communication resource allocated to the AI service; and
sending a fourth release request message to the third device, the fourth device, or the fifth device, where the fourth release request message is used to request the third device, the fourth device, or the fifth device to release the service resource associated with the AI service.

According to a fifteenth aspect, a second device is provided. The second device includes a processor and a memory, the memory stores a program or instructions capable of being run on the processor, and when the program or the instructions are executed by the processor, the steps of the method according to the second aspect are implemented.

According to a sixteenth aspect, a second device is provided, including a processor and a communication interface. The communication interface is configured to: send a first release request message to a first device, where the first release request message is used to request to release a service resource associated with an AI service; and receive a first release response message sent by the first device, where the first release response message is used to indicate whether the service resource associated with the AI service is successfully released.

According to a seventeenth aspect, a third device is provided. The third device includes a processor and a memory, the memory stores a program or instructions capable of being run on the processor, and when the program or the instructions are executed by the processor, the steps of the method according to the third aspect are implemented.

According to an eighteenth aspect, a third device is provided, including a processor and a communication interface. The communication interface is configured to: receive a second release request message sent by a first device, where the second release request message is used to request the third device to release an AI resource allocated to an AI service; and send a second release response message to the first device, where the second release response message is used to indicate whether the AI resource is successfully released. Alternatively, the communication interface is configured to: receive a fourth release request message sent by a first device, where the fourth release request message is used to request the third device to release a service resource associated with an AI service; and send a fourth release response message to the first device, where the fourth release response message is used to indicate whether the third device successfully releases the service resource associated with the AI service.

According to a nineteenth aspect, a fourth device is provided. The fourth device includes a processor and a memory, the memory stores a program or instructions capable of being run on the processor, and when the program or the instructions are executed by the processor, the steps of the method according to the fourth aspect are implemented.

According to a twentieth aspect, a fourth device is provided, including a processor and a communication interface, where the communication interface is configured to: receive a third release request message sent by a first device, where the third release request message is used by the fourth device to release a communication resource allocated to an AI service; and send a third release response message to the first device, where the third release response message is used to indicate whether the communication resource is successfully released. Alternatively, the communication interface is configured to: receive a fourth release request message sent by a first device, where the fourth release request message is used to request the fourth device to release a service resource associated with an AI service; and send a fourth release response message to the first device, where the fourth release response message is used to indicate whether the fourth device successfully releases the service resource associated with the AI service.

According to a twenty-first aspect, a fifth device is provided. The fifth device includes a processor and a memory. The memory stores a program or instructions capable of being run on the processor, and when the program or the instructions are executed by the processor, the steps of the method according to the fifth aspect are implemented.

According to a twenty-second aspect, a fifth device is provided, including a processor and a communication interface. The communication interface is configured to: receive a fourth release request message sent by a first device, where the fourth release request message is used to request the fifth device to release a service resource associated with the AI service; and send a fourth release response message to the first device, where the fourth release response message is used to indicate whether the fifth device successfully releases the service resource associated with the AI service.

According to a twenty-third aspect, a seventh device is provided. The fifth device includes a processor and a memory. The memory stores a program or instructions capable of being run on the processor, and when the program or the instructions are executed by the processor, the steps of the method according to the sixth aspect are implemented.

According to a twenty-fourth aspect, a seventh device is provided, including a processor and a communication interface. The communication interface is configured to: receive a seventh release request message sent by a third device, where the seventh release request message is used to request to release an AI resource allocated to an AI service, and the seventh release request message includes at least one of the following: an AI resource management function address, an AI session information, and an AI service information; and send a seventh release response message to the third device, where the seventh release response message is used to indicate whether the AI resource is successfully released.

According to a twenty-fifth aspect, a readable storage medium is provided. The readable storage medium stores a program or instructions. The program or the instructions are executed by a processor to implement the steps of the method according to the first aspect, or implement the steps of the method according to the second aspect, or implement the steps of the method according to the third aspect, or implement the steps of the method according to the fourth aspect, or implement the steps of the method according to the fifth aspect, or implement the steps of the method according to the sixth aspect.

According to a twenty-sixth aspect, a wireless communication system is provided, including: a second device, a first device, a third device, a fourth device, a fifth device, and a seventh device. The second device may be configured to perform the steps of the method according to the first aspect, the first device may be configured to perform the steps of the method according to the second aspect, the third device may be configured to perform the steps of the method according to the third aspect, the fourth device may be configured to perform the steps of the method according to the fourth aspect, the fifth device may be configured to perform the steps of the method according to the fifth aspect, and the seventh device may be configured to perform the steps of the method according to the sixth aspect.

According to a twenty-seventh aspect, a chip is provided. The chip includes a processor and a communication interface, the communication interface is coupled to the processor, and the processor is configured to run a program or instructions to implement the method according to the first aspect, or implement the method according to the second aspect, or implement the method according to the third aspect, or implement the method according to the fourth aspect, or implement the method according to the fifth aspect, or implement the method according to the sixth aspect.

According to a twenty-eighth aspect, a computer program/program product is provided. The computer program/program product is stored in a storage medium. The program/program product is executed by at least one processor to implement the steps of the policy negotiation method according to any one of the first aspect to the sixth aspect.

In the embodiments of this application, a first device receives a first release request message sent by a second device, where the first release request message is used to request to release a service resource associated with an AI service; the first device sends a first release response message to the second device, where the first release response message is used to indicate whether the service resource associated with the AI service is successfully released; and the first device performs at least one of the following operations based on the first release request message: determining at least one of a third device, a fourth device, and a fifth device associated with the AI service; sending a second release request message to the third device, where the second release request message is used to request to release an AI resource allocated to the AI service; sending a third release request message to the fourth device, where the third release request message is used to request to release a communication resource allocated to the AI service; and sending a fourth release request message to the third device, the fourth device, or the fifth device, where the fourth release request message is used to request to release the service resource associated with the AI service. This implements an AI service release procedure, has high flexibility, and can help dynamically recover a resource and meet resource requirements of a large quantity of AI services.

### BRIEF DESCRIPTION OF DRAWINGS

FIG. 1 is a schematic diagram of an architecture of a wireless communication system according to an embodiment of this application;
FIG. 2 is a schematic flowchart 1 of an AI service release method according to an embodiment of this application;
FIG. 3 is a schematic diagram 1 of a protocol stack of an AI service release method according to an embodiment of this application;
FIG. 4 is a schematic diagram 1 of interaction of an AI service release method according to an embodiment of this application;
FIG. 5 is a schematic diagram 2 of interaction of an AI service release method according to an embodiment of this application;
FIG. 6 is a schematic diagram 2 of a protocol stack of an AI service release method according to an embodiment of this application;
FIG. 7 is a schematic diagram 3 of a protocol stack of an AI service release method according to an embodiment of this application;
FIG. 8 is a schematic diagram 3 of interaction of an AI service release method according to an embodiment of this application;
FIG. 9 is a schematic diagram 4 of a protocol stack of an AI service release method according to an embodiment of this application;
FIG. 10 is a schematic diagram 5 of a protocol stack of an AI service release method according to an embodiment of this application;
FIG. 11 is a schematic diagram 4 of interaction of an AI service release method according to an embodiment of this application;
FIG. 12 is a schematic diagram 5 of interaction of an AI service release method according to an embodiment of this application;
FIG. 13 is a schematic flowchart 2 of an AI service release method according to an embodiment of this application;
FIG. 14a is a schematic flowchart 3 of an AI service release method according to an embodiment of this application;
FIG. 14b is a schematic flowchart 4 of an AI service release method according to an embodiment of this application;
FIG. 15a is a schematic flowchart 5 of an AI service release method according to an embodiment of this application;
FIG. 15b is a schematic flowchart 6 of an AI service release method according to an embodiment of this application;
FIG. 16 is a schematic flowchart 7 of an AI service release method according to an embodiment of this application;
FIG. 17 is a schematic flowchart 8 of an AI service release method according to an embodiment of this application;
FIG. 18 is a schematic diagram 1 of a structure of an AI service release apparatus according to an embodiment of this application;
FIG. 19 is a schematic diagram 2 of a structure of an AI service release apparatus according to an embodiment of this application;
FIG. 20 is a schematic diagram 3 of a structure of an AI service release apparatus according to an embodiment of this application;
FIG. 21 is a schematic diagram 4 of a structure of an AI service release apparatus according to an embodiment of this application;
FIG. 22 is a schematic diagram 5 of a structure of an AI service release apparatus according to an embodiment of this application;
FIG. 23 is a schematic diagram 6 of a structure of an AI service release apparatus according to an embodiment of this application;
FIG. 24 is a schematic diagram of a structure of a communication device according to an embodiment of this application;
FIG. 25 is a schematic diagram of a structure of a terminal according to an embodiment of this application; and
FIG. 26 is a schematic diagram of a structure of a network side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6^{th} Generation, 6G) communication system other than the NR system.

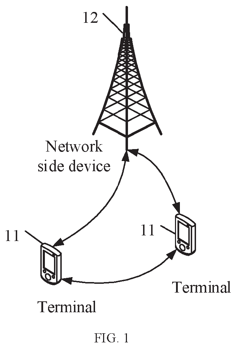

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a policy charging function, a NAS interface function, a communication management function, an AI service management function, an AI management function, an AI resource management function, an AI model management function, an AI resource node, a communication resource node, and the like. It should be noted that in embodiments of this application, only a core network device in the NR system is used as an example for description, and a specific type of the core network device is not limited.

Related nouns in the embodiments of this application are described first.
1. There are two understandings about an AI session and a packet data unit (Packet Data Unit, PDU) session. One understanding is that the AI session is carried on the PDU session. From a data plane perspective: terminal -> RAN -> UPF (it is the PDU session until this point) -> AI resource node. From a control plane perspective, when the AI session is established, a request for establishing the AI session may be placed in an N1 SM container (container), or a container that has the same level as the N1 SM container is created and transmitted to an AMF, and then sent to a service management function to establish the AI session. The other understanding is that the AI session and the PDU session are independent. From a user plane perspective, the PDU session is terminal -> RAN -> UPF, and the AI session is terminal -> RAN -> AI resource node. In this case, in terms of deployment, the UPF and the AI resource node may be jointly disposed. In the following embodiments, a solution based on the former understanding is mainly described. AI service data is carried on an AI session. The AI session is a special session between a terminal and an AI resource node. The AI session is transmitted by using a data radio bearer (Data Radio Bearer, DRB) of a PDU session, that is, user plane data of the AI session is transmitted to the AI resource node for processing by using a transmission channel of an existing PDU session (session). An AI session ID is used to identify the AI session, and is allocated by the terminal and sent to a network during AI session establishment. There is a multiple-to-one mapping relationship between AI session IDs and PDU session IDs.
Optionally, in a case that the AI session and the PDU session are independent, establishment of the AI session is similar to establishment of the PDU session, and the AI session is a session for ensuring QoS of an AI service.
2. In the following embodiments, AI service release is a concept at a most macro level. AI service release includes communication resource release and AI resource release. Communication resource release is further communication bearer release; and AI resource release is further AI bearer release.
It should be specifically noted that, to distinguish between different signaling, AI service resource release mentioned in Embodiment 3/4/5 may be understood as releasing a resource of an AI service, including releasing a communication resource and an AI resource.
3. Explanation for a communication resource, an AI resource, and a service resource: The service resource is a resource set including resources such as a communication resource, an AI resource, and a policy resource, and is a general term of resources that provide a reliable guarantee link for a service. The communication resource is a resource set provided by existing 3GPP for a communication service of a terminal or a third party, including but not limited to resources such as a communication link, an allocated and scheduled frequency band, a memory of a base station or a network element, and a signaling forwarding scheduling time. The AI resource is a resource set for ensuring an AI service, including but not limited to a computing capability of a high-performance computing machine (CPU/GPU or the like), a storage capability for a large amount of training data, and the like. For mapping to an actual link, the AI resource may be understood as a PDU session and an AI session. The former is a session on a communication resource link, and the latter is a session on an AI resource link.
4. Definitions of some network functions are shown in Table 1.

**Table 1**

| Network element name | Function description | Example |
|---|---|---|
| NAS interface function | Termination point of an AN signaling interface (N2) and termination point of NAS (N1) signaling (mobility management (Mobility Management, MM) message); | AMF (Access and Mobility Management function), which may be a PCF |
| | responsible for encryption and integrity protection of a NAS message, and responsible for functions such as registration, access, mobility management, authentication, and SMS | |
| Communication management function | Termination point of a session management (Session Management, SM) message of a NAS message; | SMF (Session Management Function) |
| | session establishment, modification, and release; | |
| | UE IP allocation management; | |
| | UPF selection and control; | |
| | charging data collection and charging interface support; | |
| | determining an SSC mode of a session; | |
| | downlink data indication | |
| Communication resource node | Anchor (if applicable) for intra-radio access technology (Radio Access Technology, RAT)/inter-RAT mobility; session point for interconnection between an external PDU and a data network; packet routing and forwarding; data packet check; implementation of some policy rules on a user plane, for example, gating, redirection, and traffic steering | UPF (User Plane Function) |
| Policy charging function | Application and service data flow detection, and policy (UE policy, session policy, and the like) generation and provision | PCF |
| AI service management function | configured to perform service management and service identifier parsing, and specifically, convert an external AI service request into an internal AI resource management function and/or a communication resource management process; and determine a required AI resource in consideration of a class of an AI service and a QoS requirement of the AI service | External service management function, service management function, and computing power service management function |
| AI model management function | configured to perform model management, and specifically, determine an appropriate model based on an external model request | Analytics logical function (Analytics logical function, AnLF) and model management function |
| AI resource management function | configured to perform service resource management, and specifically, allocate, update, and release an AI/computing power resource as required; and perform status update and maintenance of an AI/computing power resource node (AI RF) | Analytics data repository function (Analytics Data Repository Function, ADRF), resource management function, and computing power resource management function |
| AI resource node | configured to perform service processing and service policy rule implementation, and specifically, perform AI service computing processing (user plane execution process) according to a command of an AI resource management function; and perform AI resource status update to the AI resource management function | Edge computing power node, computing power resource node, and service resource node |

It should be noted that the AI service management function, the AI model management function, and the AI resource management function may be a same network element and are jointly disposed. Alternatively, the AI service management function and the AI resource management function may be a same network element and are jointly disposed.

With reference to the accompanying drawings, the following describes, by using some embodiments and application scenarios thereof, in detail the AI service release method provided in the embodiments of this application.

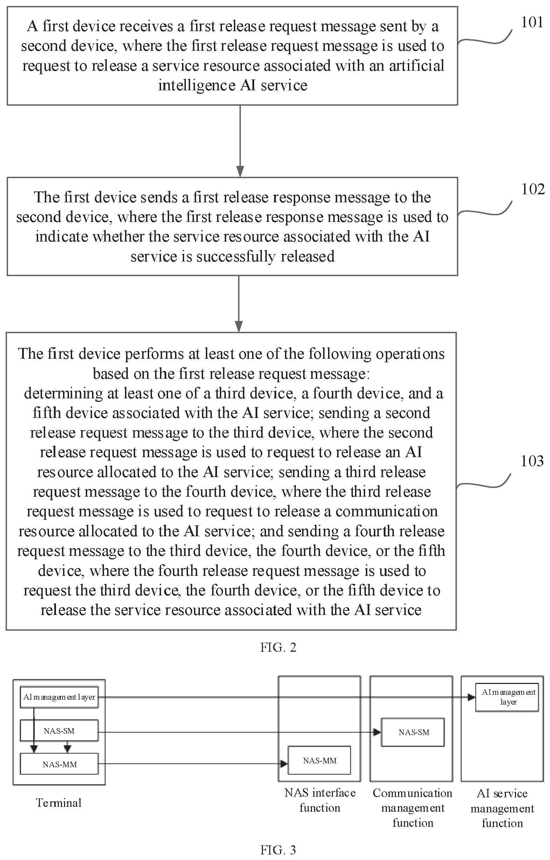

Referring to FIG. 2, an embodiment of this application provides an AI service release method. This embodiment is performed by a first device, and the AI service release method includes the following steps:
Step 101: The first device receives a first release request message sent by a second device, where the first release request message is used to request to release a service resource associated with an artificial intelligence AI service.

Optionally, the second device is a terminal or a network side device, and is shown as the terminal in the following example diagrams. The terminal may be replaced with the network side device. The network side device includes at least one of the following: a policy charging function PCF, an access and mobility management function AMF, a session management function SMF, an application server, and an NEF.

The first device may be a NAS interface function.

Specifically, the second device sends the first release request message to the first device, to request to release the service resource corresponding to the AI service, for example, a service resource (including a communication resource and an AI resource) established for the AI service.

The AI resource may be a resource used for the AI service, for example, a resource used for an AI session, and the communication resource may be a resource used for a PDU session.

Optionally, the service resource includes but is not limited to an AIresource, a communication resource, a policy resource, and the like.

Optionally, continuation of AI service release is triggered in at least one of the following cases:
triggered by an AF via a PCF when the AI service ends;
triggered by a PCF when required quality of experience (Quality of Experience, QoE) cannot be met;
triggered by a UDM via an AMF (NAS interface function) or an SMF (communication management function) when subscription changes or subscription becomes invalid;
triggered by an SMF (communication management function) during congestion control;
triggered by an AMF (NAS interface function) during congestion control;
triggered by an access network device (one form is a base station) via an AMF (NAS interface function) in at least one of the following cases: triggering is notified when communication QoS cannot be met; and congestion is controlled; and
triggered by an over the top (Over The Top, OTT) server via a 3GPP network when the AI service ends, where in this case, actually, only an AI resource is released, and no communication resource is released.

Step 102: The first device sends a first release response message to the second device, where the first release response message is used to indicate whether the service resource associated with the AI service is successfully released.

Specifically, the first device sends the first release response message corresponding to the first release request message to the second device, to notify the second device whether the service resource associated with the AI service is successfully released.

Step 103: The first device performs at least one of the following operations based on the first release request message:
determining at least one of a third device, a fourth device, and a fifth device associated with the AI service;
sending a second release request message to the third device, where the second release request message is used to request to release an AI resource allocated to the AI service;
sending a third release request message to the fourth device, where the third release request message is used to request to release a communication resource allocated to the AI service; and
sending a fourth release request message to the third device, the fourth device, or the fifth device, where the fourth release request message is used to request the third device, the fourth device, or the fifth device to release the service resource associated with the AI service.

Specifically, the third device is, for example, an AI service management function, the fourth device is, for example, a communication management function, and the fifth device is, for example, a policy charging function.

Specifically, as a device that directly interacts with the second device, the first device is responsible for transmitting the first release request message of the second device in a case that different devices serve as a control node. For example, as a control node, the first device is responsible for controlling resource release, sends the second release request message to the third device to request to release the AI resource, and sends the third release request message to the fourth device to request to release the communication resource. In addition, before a release request message is sent, a specific device to which the release request message needs to be sent needs to be determined, that is, an associated AI service management function and communication management function need to be determined.

In a case that the first device does not serve as a control node, and only serves as a transfer node, and the third device, the fourth device, or the fifth device serves as a control node, the first device needs to determine a specific device to which a release request message is to be sent, that is, determine at least one of the associated third device, fourth device, and fifth device. The first device sends the fourth release request message to the third device, the fourth device, or the fifth device, to request the third device, the fourth device, or the fifth device to release the service resource associated with the AI service. In other words, the third device, the fourth device, or the fifth device controls resource release.

It should be noted that if both "sending the second release request message to the third device" and "sending the third release request message to the fourth device" need to be performed, there is no inevitable sequence between the two messages, and "sending the second release request message to the third device" may be performed before "sending the third release request message to the fourth device", or "sending the third release request message to the fourth device" may be performed before "sending the second release request message to the third device", or "sending the second release request message to the third device" and "sending the third release request message to the fourth device" may be performed in parallel. A release sequence and serial or parallel execution are determined by the first device.

In the method in this embodiment, the first device receives a first release request message sent by a second device, where the first release request message is used to request to release a service resource associated with an AI service; the first device sends a first release response message to the second device, where the first release response message is used to indicate whether the service resource associated with the AI service is successfully released; and the first device performs at least one of the following operations based on the first release request message: determining at least one of a third device, a fourth device, and a fifth device associated with the AI service; sending a second release request message to the third device, where the second release request message is used to request to release an AI resource allocated to the AI service; sending a third release request message to the fourth device, where the third release request message is used to request to release a communication resource allocated to the AI service; and sending a fourth release request message to the third device, the fourth device, or the fifth device, where the fourth release request message is used to request to release the service resource associated with the AI service. This implements an AI service release procedure, has high flexibility, and can help dynamically recover a resource and meet resource requirements of a large quantity of AI services.

Optionally, the first release request message includes at least one of the following:
a release requester identifier, an AI service information, a packet data unit PDU session information, an AI session information, a policy information, a network identifier information, a release cause, and a release type.

When the second device (a terminal or an NF) is a terminal, the release requester identifier is a terminal identifier, such as a subscription permanent identifier (SUbscription Permanent Identifier, SUPI) or a globally unique temporary UE identity (Globally Unique Temporary UE Identity, GUTI). When the second device is any network element in the foregoing network side device, the release requester identifier is a network device identifier, such as an NF ID or a network element address. Optionally, the second release request message includes at least one of the following: a release requester identifier, an AI service information, a PDU session information, an AI session information, an AI service management function address, a policy information, and a release cause; and
the third release request message includes at least one of the following: a release requester identifier, an AI service information, a PDU session information, an AI session information, a network identifier information, a communication management function address, a policy information, and a release cause.

Optionally, the fourth release request message includes at least one parameter in the first release request message.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the network identifier information includes at least one of the following: a slice identifier and a data network name DNN;
the policy information includes at least one of the following: an AI policy identifier, a communication policy identifier, a comprehensive policy identifier, and a policy charging function address; and
the release cause includes at least one of the following: a normal release, a temporary release, and a release due to service resource switching.

The model subscription correlation identifier in the AI service information is also referred to as a model correlation ID, is an identifier that is allocated by a model management unit and that has a subscription or association relationship with a model, and may be understood as a subscription ID. The model identifier is a globally unique or locally unique identifier ID allocated by a model management unit to a model, and a unique model can be found in 3GPP or a PLMN by using this identifier. The AI service identifier is used to indicate a specific AI service, such as picture recognition, voice recognition, or environment reconstruction, and a representation form may be a series of standardized IDs. The AI service description indicates a type of an AI service, such as an inference service, a training service, or a training service and an inference service.

In an implementation, the PDU session type is used to indicate that a current PDU session is associated with an AI session, and is different from some PDU sessions related to non-AI services.

In an implementation, the AI session type is used to represent release of an AI session.

The comprehensive policy identifier is, for example, an identifier of a comprehensive policy that includes AI and communication.

The release cause is used to indicate a type of AI service resource release, including a normal release, a release due to switching, and a temporary release.

Optionally, the release type includes, for example, at least one of the following: releasing only the communication resource; releasing only the AI resource; and releasing all resources.

For example, the second device receives, for example, a release request message that includes a release requester identifier, and may determine, based on the release requester identifier, a device for which an AI service needs to be released, and release the AI service associated with the device corresponding to the release requester identifier, that is, release a service resource managed by the AI service. For example, the second device receives a release request message that includes AI service information, and may determine, based on the AI service information, an AI service to be released, and then initiate a release procedure. For example, the second device receives a release request message that includes PDU session information, and may determine, based on the PDU session information, an AI service associated with the PDU session information, and then initiate a release procedure. For example, the second device receives a release request message that includes policy information, and may determine, based on the policy information, an AI service associated with the policy information, such as an AI service to which the policy information is applicable, and then initiate a release procedure. For example, the second device receives a release request message that includes a release cause, and the release cause is, for example, temporary release. In this case, the service resource of the AI service is released. For example, after a corresponding resource or bearer is released, a locally stored context is retained. For example, the second device receives a release request message that includes a release type, and the release type is, for example, releasing only the AI resource. In this case, the AI resource of the AI service is released.

Optionally, an implementation of the release request message includes at least one of the following:
a new message, used to release a session/resource/bearer related to the AI service, and released resources related to the AI service include the communication resource and the AI resource; and
an existing PDU session release request, where in the release request message, a PDU session type needs to be set to "Al session", and an AI session type needs to be set to "releasing AI session", to indicate a network to release the PDU session and the associated AI session.

It should be noted that for temporary release in the release cause, in a subsequent operation, after a network element releases a corresponding resource or bearer, a locally stored context is retained, and the resource configuration and the bearer configuration may be referenced or reused when the same AI service is subsequently established. In a case of non-temporary release (including a normal release, a release due to switching, or the like), a locally retained context is directly deleted, and needs to be reestablished when the same AI service is established subsequently.

It should be noted that a relationship between the AI session and the PDU session should have two understandings: One is that the AI session is carried on the PDU session, and the other is that the AI session and the PDU session are independent of each other. In the former case, that is, when AI service data is transmitted on a data plane, the AI data is carried on a data plane resource from UE to a UPF, which are tightly coupled during establishment and release. The PDU session type may be set to "AI session" (which is understood as a PDU session attribute herein, where the PDU session is associated with the AI session), and the AI session type may be set to "releasing AI session", to implement resource release (First, the PDU session type is associated with the AI session, and is different from some PDU sessions that currently support only communication. Second, the AI session type indicates a release operation. In this way, a receiver may understand that the AI-related resource is to be released. This is further understood as follows: Only when the PDU session type indicates the AI session, the AI session type is further carried, to indicate an establishment operation, a modification operation, or a release operation). In the latter case, release should be mutually independent. That is, when the release request message includes only AI session information, a network side performs release of the AI resource. When the request message includes only PDU session information, a network side performs release of the communication resource. The two are decoupled from each other, and do not need to be released in a same message. Certainly, in the latter case, release by the network side is still requested by using one request message.

In addition, the NAS interface function may be understood as an AMF.

The following are several implementations of "partial release":

### Implementation 1:

If the release request message includes only AI service information, and does not include AI session information and PDU session information, the NAS interface function may find AI session and PDU session information associated with the AI service, and both "sending the second release request message to the third device" and "sending the third release request message to the fourth device" need to be performed. If the release request message includes only AI session information, the NAS interface function only needs to send the second release request message to release the associated AI resource. If the release request message includes only PDU session information, the NAS interface function only needs to send the third release request message to release the associated communication resource.

### Implementation 2:

When the release type is releasing only the AI resource, only "sending the second release request message to the third device" and a subsequent related step are performed subsequently, "sending the third release request message to the fourth device" and a subsequent related step are not performed, and only content related to the AI resource is released, including an AI bearer and an AI policy. When the release type is releasing only the communication resource, only "sending the third release request message to the fourth device" and a related step are performed subsequently, "sending the second release request message to the third device" and a subsequent related step are not performed, and only content related to the communication resource is released, including a communication bearer and a communication policy. When the release type is releasing all resources, subsequent steps are performed normally to release the AI resource and the communication resource.

It should be noted that a case of the foregoing partial release (including releasing only the AI resource or releasing only the communication resource) includes: One PDU session may support service flows of a plurality of AI sessions, that is, there are a plurality of QoS flows in the PDU session, and a plurality of different AI services may be supported. One AI service is performed on one AI session. When an AI service ends, a PDU session may release/modify a corresponding QoS flow, and an AI session carried on the PDU session is released. This is partial release herein. In this case, the communication resource is not released, and only the AI resource is released.

Optionally, in a case that the first release response message is used to indicate that the service resource associated with the AI service fails to be released, the first release response message includes a first cause value, and the first cause value includes at least one of the following: the AI service does not exist, the AI service is in use and cannot be released, the communication resource fails to be released, and the AI resource fails to be released.

Specifically, if the first device does not find the associated communication management function and AI service management function, or AI service information requested by the second device is not supported in a current network, the first device directly sends the first release response message, to reject the request of the second device, and indicate that the resource associated with the requested AI service cannot be released. The first cause value includes: the AI service resource does not exist, the AI session does not exist, the communication resource does not exist, or the AI service does not exist.

Optionally, the method further includes:
receiving, by the first device, a second release response message sent by the third device, where the second release response message is used to indicate whether the AI resource is successfully released; and
in a case that the second release response message is used to indicate that the AI resource fails to be released, the second release response message includes a second cause value, and the second cause value includes at least one of the following: the AI resource does not exist, and the AI resource is in use and cannot be released.

Optionally, when the second release response message is used to indicate that release succeeds, the first device sends the third release request message to the fourth device to further release the communication resource; otherwise, the first device directly returns the first release response message and indicates that release fails.

Optionally, the method further includes:
receiving, by the first device, a third release response message sent by the fourth device, where the third release response message is used to indicate whether the communication resource is successfully released; and
in a case that the third release response message is used to indicate that the communication resource fails to be released, the third release response message includes a third cause value, and the third cause value includes at least one of the following: the communication resource does not exist, and the communication resource is in use and cannot be released.

Optionally, the method further includes:
receiving, by the first device, a fourth release response message sent by the third device, the fourth device, or the fifth device, where the fourth release response message is used to indicate whether the service resource associated with the AI service is successfully released; and
in a case that the fourth release response message is used to indicate that the service resource fails to be released, the fourth release response message includes a fourth cause value, and the fourth cause value includes at least one of the following: the AI service does not exist, the communication resource fails to be released, the AI resource fails to be released, and the AI service is in use and cannot be released.

Optionally, a protocol stack of the second device includes at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

Specifically, a message related to releasing the AI resource may be generated by using a newly added AI management layer, and the AI management layer may be disposed below or above NAS-SM, or disposed within NAS-SM. This is not limited in this embodiment of this application.

In the foregoing implementation, implementations of the protocol stack are diversified, and flexibility is relatively high.

For example, as shown in FIG. 3, a newly added protocol layer, such as the AI management layer, is responsible for generating an AI service message, such as an AI service establishment message and an AI service release message, to trigger allocation and release of an AI resource.

A message encapsulation mode is a NAS message (a communication resource release message and an AI resource release message) (the communication resource release message has a parallel relationship with the AI resource release message).

That is, the message encapsulation mode is that the NAS message is used to carry the message related to releasing the AI resource (for example, the AI resource release message), and/or carry the message related to releasing the communication resource (for example, the communication resource release message).

The NAS-SM layer generates the communication resource release message, and the AI management layer generates the AI resource release message. In addition, the NAS interface function determines whether to perform serial execution or parallel execution, and a sequence of forwarding a communication resource release request message and an AI resource release request message during serial execution.

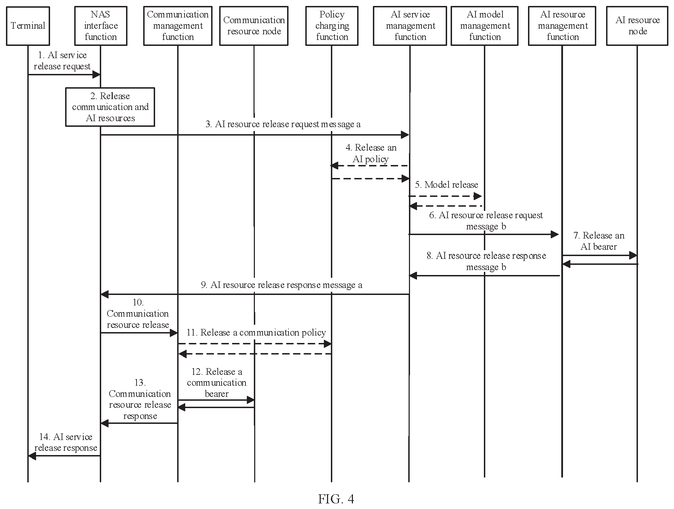

For example, as shown in FIG. 4, serial release of the AI resource and the communication resource are triggered by the terminal and controlled by the NAS interface function. In this embodiment, the protocol architecture shown in FIG. 3 may be used. The method includes the following steps.

Step 1: The terminal sends an AI service release request message to the NAS interface function.

Step 2: The NAS interface function releases communication and AI resources.

Step 3: The NAS interface function sends an AI resource release request message a to an AI service management function.

Step 4: The AI service management function sends an AI policy release request message to a policy charging function.

Step 5: The AI service management function sends a model release request message to an AI model management function.

Step 6: The AI service management function sends an AI resource release request message b to an AI resource management function.

Step 7: The AI resource management function sends an AI bearer release request to an AI resource node.

Step 8: The AI resource management function sends an AI resource release response message b to the AI service management function.

Step 9: The AI service management function sends an AI resource release response message a to the NAS interface function.

Step 10: The NAS interface function sends a communication resource release request to a communication management function.

Step 11: The communication management function sends a communication policy release request to the policy charging function.

Step 12: The communication management function sends a communication bearer release request to a communication resource node.

Step 13: The communication management function sends a communication resource release response to the NAS interface function.

Step 14: The NAS interface function sends an AI service release response message to the terminal.

Optionally, the fourth device sends a release request message to a ninth device (such as a communication resource node), to request to release a communication bearer allocated to the AI service. The release request message includes at least one of the following: a communication resource node address, a PDU session information, and an AI service information.

Optionally, the fourth device receives a release response message sent by the ninth device, where the release response message is used to indicate whether the communication bearer is successfully released.

In a case that the release response message is used to indicate that the communication bearer fails to be released, the release response message includes a cause value, for example, includes at least one of the following: the communication bearer does not exist, and the communication bearer is in use and cannot be released.

It should be noted that step 4 is optional. If an AI policy is not allocated to an AI service session by the policy charging function when the AI service session is established, but is locally configured by the AI management function, in this embodiment, when the AI policy is released, the AI service management function locally releases the corresponding AI policy from a policy context associated with the terminal.

It should be noted that step 11 is optional. If a communication policy is not allocated to an AI service session by the policy charging function when the AI service session is established, but is locally configured by the communication management function, in this embodiment, when the communication policy is released, the communication management function locally releases the corresponding communication policy from a policy context associated with the UE.

Optionally, the AI policy release request in step 4 may be canceling an association relationship, or may be deleting an AI policy associated with the AI service. This is not limited in this embodiment of this application.

Optionally, the communication policy release request in step 11 may be canceling an association relationship, or may be deleting a communication policy associated with the AI service. This is not limited in this embodiment of this application.

Optionally, the AI service management function sends the model release request message to the AImodel management function, to release an association status between a model and the AI service or release an association status between a model and a user. The model release message includes at least one of the following: a release requester identifier, an AI service identifier, an AI service description, a model subscription correlation identifier, a model identifier, and an AI model management function address.

It should be noted that the model release herein is not requesting the AI model management function to completely delete a model. The release herein is a change of an association status triggered by an AI service termination, that is, the terminal or the AI service is no longer a model consumer, and a binding relationship is changed (disassociated). After a new AI service is triggered subsequently, a new model may be bound, or the same model may be bound.

This step is optional. This step needs to be performed when at least one of the following conditions is met:
The AI service information includes the model identifier, such as a model ID.

The AI service information includes the model subscription correlation identifier, such as a model correlation ID.

The AI service information may be AI service information included in the model release request message.

Optionally, the AI model management function sends a model release response message to the AI service management function, to return whether the model associated with the AI service is successfully released.

Optionally, in step 6, the AI service management function sends the AI resource release request message b to the AIresource management function, to request to release the AI resource established for the AI service, including a computing resource, a storage resource, and an AI link resource (that is, an AI bearer) that are reserved for the AI service.

The AI resource release request message b includes at least one of the following: an AI resource management function address, an AI session information, and an AI service information.

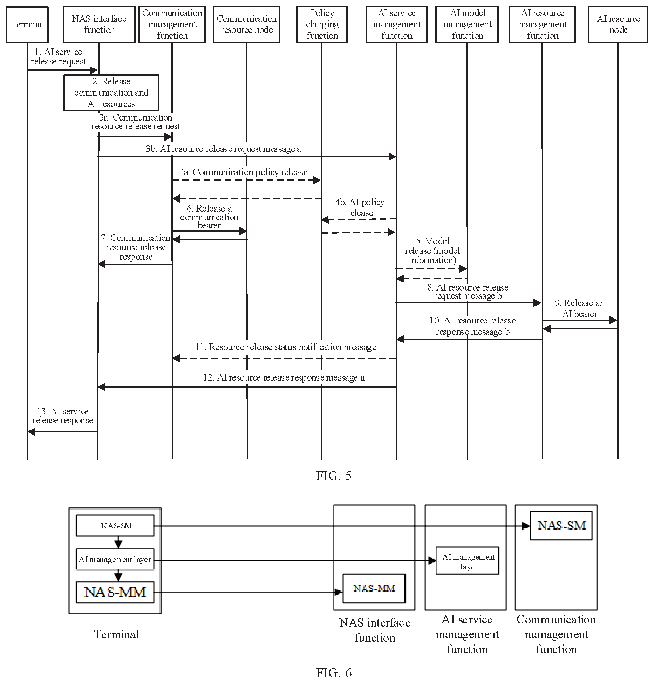

For example, as shown in FIG. 5, parallel release of the AI resource and the communication resource are triggered by the terminal and controlled by the NAS interface function. The protocol stack shown in FIG. 3 may be used. The NAS interface function forwards a communication resource release message and an AI resource release message in parallel. The method includes the following steps.

Step 1: The terminal sends an AI service release request message to the NAS interface function.

Step 2: The NAS interface function releases communication and AI resources.

Step 3a: The NAS interface function sends a communication resource release request message to a communication management function.

Step 3b: The NAS interface function sends an AI resource release request message a to an AI service management function.

Step 4a: The communication management function sends a communication policy release request to a policy charging function.

Step 4b: The AI service management function sends an AI policy release request to the policy charging function.

Step 5: The AI service management function sends a model release request to an AI model management function.

Step 6: The communication management function sends a communication bearer release request to a communication resource node.

Step 7: The communication management function sends a communication resource release response message to the NAS interface function.

Step 8: The AI service management function sends an AI resource release request message b to an AI resource management function.

Step 9: The AI resource management function sends an AI bearer release request to an AI resource node.

Step 10: The AI resource management function sends an AI resource release response message b to the AI service management function.

Step 11: The AI service management function sends a resource release status notification message to the communication management function.

Step 12: The AI service management function sends an AI resource release response message a to the NAS interface function.

Step 13: The NAS interface function sends an AI service release response message to the terminal.

Specifically, a difference between this embodiment and the embodiment shown in FIG. 4 lies in that the NAS interface function initiates communication resource release and AI resource release, which belong to a parallel operation, but a serial operation is performed in the embodiment shown in FIG. 4 (there is no mandatory requirement on a sequence of initiating communication resource release and AI resource release).

Steps 3a, 4a, 6, and 7 belong to a communication resource release procedure. Steps 3b, 4b, 5, 8 to 10, and 12 belong to an AI resource release procedure. For a specific procedure, refer to similar descriptions in the foregoing embodiment. This procedure supports releasing only the AI resource or releasing only the communication resource.

Optionally, this embodiment includes step 11. In step 11, a message is a status notification message, and is sent between the AI service management function and the communication management function. In FIG. 5, the AI service management function sends the message to the communication management function, but likewise, the communication management function may send the message to the AI service management function. The status notification message is used to notify a resource release status. In the case shown in FIG. 5, when the AI resource fails to be released, the AI service management function notifies the communication management function that the communication resource associated with the current AI service needs to be maintained and not released.

Optionally, the status notification message includes at least one of the following:
a release requester identifier, an AI service management function address, a communication management function address, a PDU session information, an AI session information, an AI service information, a status indication, and a failure cause.

The status indication is used to indicate whether the AI resource or the communication resource of the AI service is successfully released.

The status indication indicates a case of releasing the AI resource or the communication resource, including a release success, a release failure, or release blocking.

A failure cause includes: the AI resource does not exist, the communication resource does not exist, or a resource is in use and cannot be released.

For example, after the communication management function receives the resource release status notification message (this message may occur before or after step 6), if the communication resource has been released (step 6 occurs), a communication resource managed by the AI service is reestablished. Otherwise (step 6 does not occur), step 6 does not need to be performed, and a release failure is directly indicated in the response message in step 7. A cause value is consistent with a cause value in a received resource release status notification.

Optionally, as shown in FIG. 6, a protocol layer, such as an AI management layer, is newly added. The newly added protocol layer is below an existing NAS-SM layer.

A message encapsulation mode is a NAS message (an AI resource release message (a communication resource release message)).

That is, the message encapsulation mode is that the NAS message is used to carry the message related to releasing the AI resource, and the message related to releasing the AI resource includes the message related to releasing the communication resource.

The NAS-SM layer is configured to generate the message related to releasing the communication resource, and the AI management layer is configured to generate the message related to releasing the AI resource.

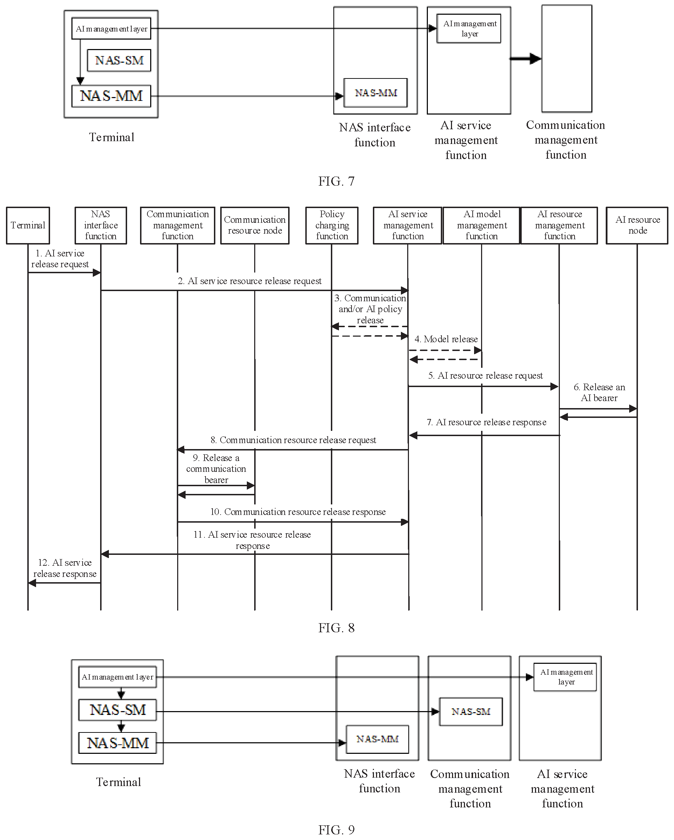

As shown in FIG. 7, a difference from the protocol stack in FIG. 6 lies in that the AI service management function generates a communication resource release message and sends the communication resource release message to the communication management function (interaction between network elements).

A message encapsulation mode is a NAS message (an AI resource release message).

That is, the message encapsulation mode is that the NAS message is used to carry the message related to releasing the AI resource. Communication resource release needs to be initiated by default.

The AI service management function generates a communication resource release message, and the AI management layer of the terminal or the network device generates an AI resource release message.

For example, as shown in FIG. 8, serial release of the AI resource and the communication resource are triggered by the terminal and controlled by the AI service management function. The protocol stack shown in FIG. 6 and FIG. 7 may be used. In this case, the second device and the NAS interface function are not used as control nodes, and only forward an AI service release request message of the terminal or the network device. The method includes the following steps.

Step 1: The terminal sends an AI service release request message to the NAS interface function.

Step 2: The NAS interface function sends an AI service resource release request to the AI service management function.

Step 3: The AI service management function sends at least one of communication policy release and AI policy release to a policy charging function.

Step 4: The AI service management function sends a model release request to an AI model management function.

Step 5: The AI service management function sends an AI resource release request message to an AI resource management function.

Step 6: The AI resource management function sends an AI bearer release request to an AI resource node.

Step 7: The AI resource management function sends an AI resource release response message to the AI service management function.

Step 8: The AI service management function sends a communication resource release request message to a communication management function.

Step 9: The communication management function sends a communication bearer release request to a communication resource node.

Step 10: The communication management function sends a communication resource release response message to the AI service management function.

Step 11: The AI service management function sends an AI service resource release response message to the NAS interface function.

Step 12: The NAS interface function sends an AI service release response message to the terminal.

Specifically, a difference between this embodiment and the embodiment shown in FIG. 4 is as follows:
(1) After receiving the AI service release request message sent by the terminal, the NAS interface function first sends the AI service resource release request message to the AI service management function in step 2, and the AI service management function is responsible for a resource release task.
(2) After successfully releasing the AI resource, the AI service management function sends a message to the communication management function to release a communication session. Certainly, the AI service management function may determine whether to perform step 4 to step 7 or step 8 to step 10 first. Any sequence is available. Release of the other party is triggered only when one party is successfully released. Otherwise, an AI service resource release response message is directly returned, indicating that release fails. In a case that both parties are released successfully, the AI service resource release response message indicates that release succeeds.
(3) If a release type is carried in step 1 and indicates that only the communication resource is released, the specified communication resource is released. For example, the AI service management function sends a communication resource release request message to the communication resource management function. Alternatively, the release type indicates to release all resource session information. In this case, all resources are released. For example, the AI service management function sends a communication resource release request message to the communication resource management function, and the AI service management function sends an AI resource release request message to the AI resource management function.

Optionally, as shown in FIG. 9, a newly added protocol layer, such as the AI management layer, is responsible for generating an AI service message, such as an AI service establishment message and an AI service release message, to trigger allocation and release of an AI resource.

A message encapsulation mode is a NAS message (a communication resource release message (an AI resource release message)).

The message encapsulation mode is that the NAS message is used to carry the message related to releasing the communication resource, and the message related to releasing the communication resource includes the message related to releasing the AI resource.

The NAS-SM layer generates a communication resource release message, and the AI management layer generates an AI resource release message.

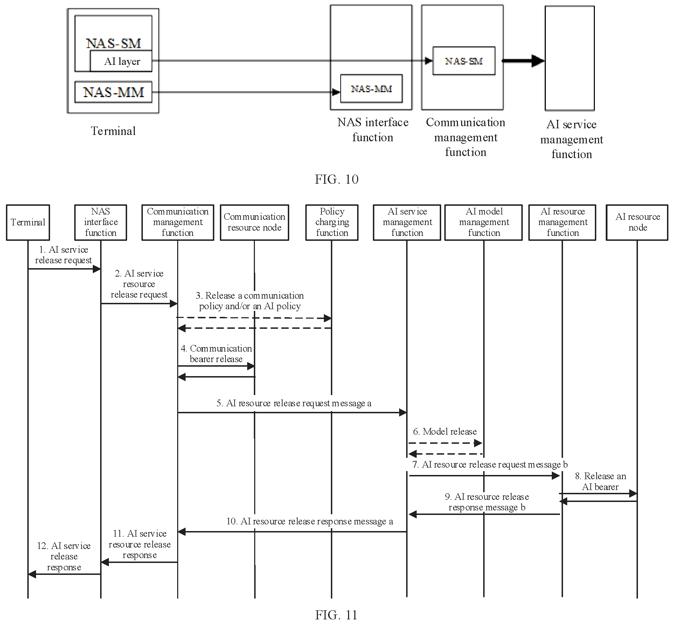

As shown in FIG. 10, the NAS-SM layer is enhanced. When generating a communication resource release message, the NAS-SM includes AI service description information, to indicate a network to release the AI resource.

A message encapsulation mode is a NAS message (a communication resource release message [AI service description information]).

The message encapsulation mode is that the NAS message is used to carry the message related to releasing the communication resource, and the message related to releasing the communication resource includes the AI service description information.

For example, as shown in FIG. 11, serial release of the AI resource and the communication resource are triggered by the terminal and controlled by the communication management function. In this case, the second device and the NAS interface function are not used as control nodes, and only forward an AI service release request message of the terminal or the network device. The protocol stack shown in FIG. 6 and FIG. 7 may be used. The method includes the following steps.

Step 1: The terminal sends an AI service release request message to the NAS interface function.

Step 2: The NAS interface function sends an AI service resource release request to the communication management function.

Step 3: The communication management function sends at least one of communication policy release and AI policy release to a policy charging function.

Step 4: The communication management function sends a communication bearer release request to a communication resource node.

Step 5: The communication management function sends an AI resource release request message a to an AI service management function.

Step 6: The AI service management function sends a model release request to an AI model management function.

Step 7: The AI service management function sends an AI resource release request message b to an AI resource management function.

Step 8: The AI resource management function sends an AI bearer release request to an AI resource node.

Step 9: The AI resource management function sends an AI resource release response message b to the AI service management function.

Step 10: The AI service management function sends an AI resource release response message a to the NAS interface function.

Step 11: The communication management function sends an AI service resource release response message to the NAS interface function.

Step 12: The NAS interface function sends an AI service release response message to the terminal.

Specifically, a difference between this embodiment and the embodiment shown in FIG. 4 is as follows:
(1) After receiving the AI service release request message sent by the terminal, the NAS interface function first sends the AI service resource release message to the communication management function in step 2, and the communication management function is responsible for a resource release task.
(2) After successfully releasing the communication resource, the communication management function sends a message to the AI service management function to release the AI resource. Certainly, the communication management function may determine whether to perform step 4 or step 5 to step 10 first. Any sequence is available. Release of the other party is triggered only when one party is successfully released. Otherwise, an AI service resource release response message is directly returned, indicating that release fails. In a case that both parties are released successfully, the AI service resource release response message indicates that release succeeds.
(3) If a release type is carried in step 1 and indicates that only the AI resource is released, specified AI session information is released or all resources are released. For example, the communication management function sends an AI resource release request message to the AI service management function. Alternatively, the release type indicates to release all resources. In this case, all the resources are released. The communication management function sends an AI resource release request message to the AI service management function, and the communication management function sends a communication bearer release request message to the communication resource node.

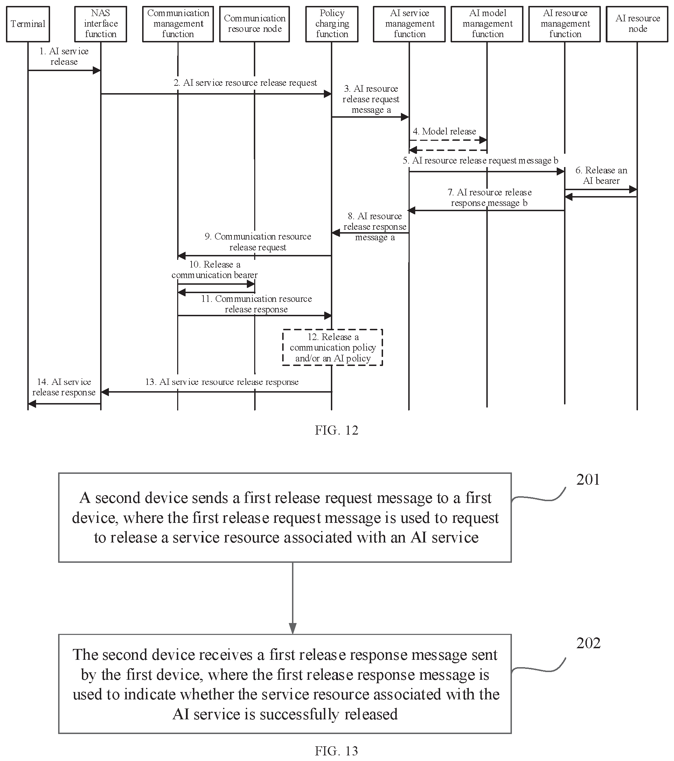

For example, as shown in FIG. 12, serial release of the AI resource and the communication resource are triggered by the terminal and controlled by the policy charging function. In this case, the second device and the NAS interface function are not used as control nodes, and only forward an AI service release request message of the terminal or the network device. The method includes the following steps.

Step 1: The terminal sends an AI service release request message to the NAS interface function.

Step 2: The NAS interface function sends an AI service resource release request to the policy charging function.

Step 3: The policy charging function sends an AI resource release request message a to an AI service management function.

Step 4: The AI service management function sends a model release request to an AI model management function.

Step 5: The AI service management function sends an AI resource release request message b to an AI resource management function.

Step 6: The AI resource management function sends an AI bearer release request to an AI resource node.

Step 7: The AI resource management function sends an AI resource release response message b to the AI service management function.

Step 8: The AI service management function sends an AI resource release response message a to the NAS interface function.

Step 9: The policy charging function sends a communication resource release request to a communication management function.

Step 10: The communication management function sends a communication bearer release request to a communication resource node.

Step 11: The communication management function sends a communication resource release response to the policy charging function.

Step 12: The policy charging function releases at least one of a communication policy and an AI policy.

Step 13: The policy charging function sends an AI service resource release response message to the NAS interface function.

Step 14: The NAS interface function sends an AI service release response message to the terminal.

Specifically, a difference between this embodiment and the embodiment shown in FIG. 4 is as follows:

After receiving the AI service release message sent by the terminal, the NAS interface function sends the AI service resource release message to the policy charging function, where a carried parameter includes the parameter carried in step 1.

This procedure supports releasing only the AI resource or releasing only the communication resource.

Step 3 to step 8 belong to an AI resource release procedure. Step 9 to step 11 belong to a communication resource release procedure. A sequence of the two parts is not limited, and may be determined by the policy charging function. Release of the other party is triggered only when one party is successfully released. Otherwise, an AI service resource release response message is directly returned, indicating that release fails. In a case that both parties are successfully released, the policy charging function optionally performs step 12 to release at least one of the communication policy and the AI policy associated with the AI service.

Referring to FIG. 13, an embodiment of this application provides an AI service release method. This embodiment is performed by a second device, and the AI service release method includes the following steps:
Step 201: The second device sends a first release request message to a first device, where the first release request message is used to request to release a service resource associated with an AI service.
Step 202: The second device receives a first release response message sent by the first device, where the first release response message is used to indicate whether the service resource associated with the AI service is successfully released.

Optionally, the first release request message includes at least one of the following:
a release requester identifier, an AI service information, a packet data unit PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

Optionally, in a case that the first release response message is used to indicate that the service resource associated with the AI service fails to be released, the first release response message includes a first cause value, and the first cause value includes at least one of the following: the AI service does not exist, the AI service is in use and cannot be released, the communication resource fails to be released, and the AI resource fails to be released.

Optionally, a protocol stack of the second device includes at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

Optionally, the second device is a terminal or a network side device, and the network side device includes at least one of the following: a policy charging function PCF, an access and mobility management function AMF, a session management function SMF, an application server, and an NEF.

A specific implementation process and technical effects of the method in this embodiment are the same as those in the method embodiment on the first device side. For details, refer to the detailed descriptions in the embodiment on the first device side. Details are not described herein again.

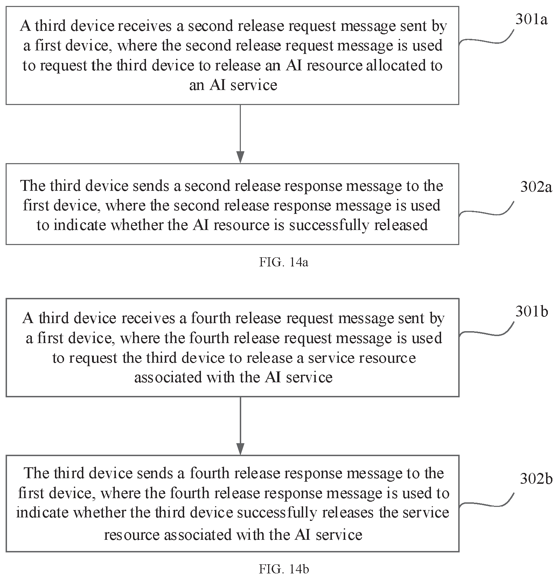

Referring to FIG. 14a and FIG. 14b, an embodiment of this application provides an AI service release method. This embodiment is performed by a third device, and the AI service release method includes the following steps:
Step 301a: The third device receives a second release request message sent by a first device, where the second release request message is used to request the third device to release an AI resource allocated to an AI service.
Step 302a: The third device sends a second release response message to the first device, where the second release response message is used to indicate whether the AI resource is successfully released.
   or
Step 301b: The third device receives a fourth release request message sent by a first device, where the fourth release request message is used to request the third device to release a service resource associated with an AI service.
Step 302b: The third device sends a fourth release response message to the first device, where the fourth release response message is used to indicate whether the third device successfully releases the service resource associated with the AI service.

Optionally, the second release request message includes at least one of the following: a release requester identifier, an AI service information, a PDU session information, an AI session information, an AI service management function address, a policy information, and a release cause.

Optionally, the fourth release request message includes at least one of the following:
a release requester identifier, an AI service information, a PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

Optionally, the method further includes:
sending, by the third device, a fifth release request message to a fifth device, where the fifth release request message is used to request to release an AI policy associated with the AI service; and
the fifth release request message includes at least one of the following: a release requester identifier, an AI policy identifier, an AI session information, a network resource identifier, a PDU session information, an AI service information, a release cause, and a policy information.

Optionally, the method further includes:
receiving, by the third device, a fifth release response message sent by the fifth device, where the fifth release response message is used to indicate whether the AI policy associated with the AI service is successfully released; and
in a case that the fifth release response message is used to indicate that the AI policy associated with the AI service fails to be released, the fifth release response message includes a fifth cause value, and the fifth cause value includes at least one of the following: the AI policy does not exist, and the AI policy is in use and cannot be released.

Optionally, the method further includes:
canceling, by the third device based on an AI policy associated with the AI service and a release requester identifier associated with the AI policy, an association relationship between a release requester and the AI policy from a local context of the third device.

Optionally, the method further includes:
sending, by the third device, a sixth release request message to a sixth device, where the sixth release request message is used to request to release an association status between a model and the AI service or release an association status between a model and a user; and
the sixth release request message includes at least one of the following: a release requester identifier, an AI service identifier, an AI service description, a model subscription correlation identifier, a model identifier, and an AI model management function address.

Optionally, the method further includes:
sending, by the third device, a seventh release request message to a seventh device, where the seventh release request message is used to request to release the AI resource allocated to the AI service, and the seventh release request message includes at least one of the following: an AI resource management function address, an AI session information, and an AI service information.

Optionally, the sending, by the third device, a sixth release request message to a sixth device includes:
in a case that a preset condition is met, send, by the third device, the sixth release request message to the sixth device, where
the preset condition includes at least one of the following:
   the sixth release request message includes the model identifier; and
   the sixth release request message includes the model subscription correlation identifier.

The method further includes:
receiving, by the third device, a sixth release response message sent by the sixth device, where the sixth release response message is used to indicate whether the association status corresponding to the model is successfully released.

Optionally, the method further includes:
receiving, by the third device, a seventh release response message sent by the seventh device, where the seventh release response message is used to indicate whether the AI resource is successfully released; and
in a case that the seventh release response message is used to indicate that the AI resource fails to be released, the seventh release response message includes a seventh cause value, and the seventh cause value includes at least one of the following: the AI resource does not exist, and the AI resource is in use and cannot be released.

Optionally, the method further includes:
in a case that the third device receives the fourth release request message sent by the first device, sending, by the third device, a ninth release request message to the fifth device, where the ninth release request message is used to request to release an AI policy and/or a communication policy associated with the AI service; and
the ninth release request message includes at least one of the following: a release requester identifier, an AI policy identifier, a communication policy identifier, an AI session information, a PDU session information, a network resource identifier, an AI service information, a release cause, and a policy information.

Optionally, the method further includes:
receiving, by the third device, a ninth release response message sent by the fifth device, where the ninth release response message is used to indicate whether the AI policy and/or the communication policy are/is successfully released; and
in a case that the ninth release response message is used to indicate that the AI policy and/or the communication policy fail/fails to be released, the ninth release response message includes an eighth cause value, and the eighth cause value includes at least one of the following: the AI policy does not exist, the AI policy is in use and cannot be released, the communication policy does not exist, and the communication policy is in use and cannot be released.

Optionally, the method further includes:
in the case that the third device receives the fourth release request message sent by the first device, sending, by the third device, an eighth release request message to a fourth device, where the eighth release request message is used to request to release a communication resource allocated to the AI service; and
the eighth release request message includes at least one of the following: a release requester identifier, a PDU session information, an AI session information, an AI service information, a network identifier information, a communication management function address, a release cause, and a policy information.

Optionally, the method further includes:
receiving, by the third device, an eighth release response message sent by the fourth device, where the eighth release response message is used to indicate whether the communication resource is successfully released; and
in a case that the eighth release response message is used to indicate that the communication resource fails to be released, the eighth release response message includes an eighth cause value, and the eighth cause value includes at least one of the following: the communication resource does not exist, and the communication resource is in use and cannot be released.

Optionally, in a case that the second release response message is used to indicate that the AI resource fails to be released, the second release response message includes a second cause value, and the second cause value includes at least one of the following: the AI resource does not exist, and the AI resource is in use and cannot be released.

Optionally, the method further includes:
in a case that the third device receives the second release request message sent by the first device, receiving, by the third device, a status notification message sent by the fourth device, where the status notification message is used to notify a resource release status; and
the status notification message includes at least one of the following:
   a release requester identifier, an AI service management function address, a communication management function address, a PDU session information, an AI session information, an AI service information, a status indication, and a failure cause.

The status indication is used to indicate whether the AI resource or the communication resource of the AI service is successfully released.

Optionally, the method further includes:
in a case that the third device receives the fourth release request message sent by the first device and the release type is used to indicate to release the communication resource, sending, by the third device, the eighth release request message to the fourth device; or
in a case that the third device receives the fourth release request message sent by the first device and the release type is used to indicate to release all the resources, sending, by the third device, the seventh release request message to the seventh device, and/or sending, by the third device, the eighth release request message to the fourth device.

A specific implementation process and technical effects of the method in this embodiment are the same as those in the method embodiment on the first device side. For details, refer to the detailed descriptions in the embodiment on the first device side. Details are not described herein again.

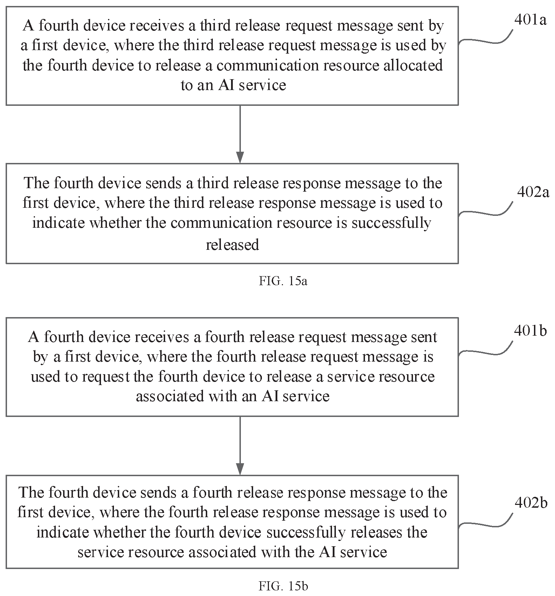

Referring to FIG. 15a and FIG. 15b, an embodiment of this application provides an AI service release method. This embodiment is performed by a fourth device, and the AI service release method includes the following steps:
Step 401a: The fourth device receives a third release request message sent by a first device, where the third release request message is used by the fourth device to release a communication resource allocated to an AI service.
Step 402a: The fourth device sends a third release response message to the first device, where the third release response message is used to indicate whether the communication resource is successfully released.
   or
Step 401b: The fourth device receives a fourth release request message sent by a first device, where the fourth release request message is used to request the fourth device to release a service resource associated with an AI service.
Step 402b: The fourth device sends a fourth release response message to the first device, where the fourth release response message is used to indicate whether the fourth device successfully releases the service resource associated with the AI service.

Optionally, the third release request message includes at least one of the following: a release requester identifier, an AI service information, a PDU session information, an AI session information, a network identifier information, a communication management function address, a policy information, and a release cause.

Optionally, the fourth release request message includes at least one of the following:
a release requester identifier, an AI service information, a packet data unit PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the network identifier information includes at least one of the following: a slice identifier and a data network name DNN;
the policy information includes at least one of the following: an AI policy identifier, a communication policy identifier, a comprehensive policy identifier, and a policy charging function address; and
the release cause includes at least one of the following: a normal release, a temporary release, and a release due to service resource switching.

Optionally, the method further includes:
in a case that the fourth device receives the third release request message sent by the first device, sending, by the fourth device, a tenth release request message to a fifth device, where the tenth release request message is used to request to release a communication policy associated with the AI service; and
the tenth release request message includes at least one of the following: a release requester identifier, a communication policy identifier, a PDU session information, a network resource identifier, an AI session information, an AI service information, a release cause, and a policy information.

Optionally, the method further includes:
receiving, by the fourth device, a tenth release response message sent by the fifth device, where the tenth release response message is used to indicate whether the communication policy associated with the AI service is successfully released; and
in a case that the tenth release response message is used to indicate that the communication policy fails to be released, the tenth release response message includes a tenth cause value, and the tenth cause value includes at least one of the following: the communication policy does not exist, and the communication policy is in use and cannot be released.

Optionally, the method further includes:
in a case that the fourth device receives the fourth release request message sent by the first device, sending, by the fourth device, a twelfth release request message to the fifth device, where the twelfth release request message is used to request to release an AI policy and/or a communication policy associated with the AI service; and
the twelfth release request message includes at least one of the following: a release requester identifier, a communication policy identifier, an AI policy identifier, a PDU session information, an AI session information, a network resource identifier, an AI service information, a release cause, and a policy information.

Optionally, the method further includes:
in the case that the fourth device receives the fourth release request message sent by the first device, sending, by the fourth device, an eleventh release request message to a third device, where the eleventh release request message is used to request to release an AI resource allocated to the AI service; and
the eleventh release request message includes at least one of the following: a release requester identifier, an AI session information, and a PDU session information.

Optionally, the method further includes:
receiving, by the fourth device, an eleventh release response message sent by the third device, where the eleventh release response message is used to indicate whether the AI resource is successfully released; and
in a case that the eleventh release response message is used to indicate that the AI resource fails to be released, the eleventh release response message includes an eleventh cause value, and the eleventh cause value includes at least one of the following: the AI resource does not exist, and the AI resource is in use and cannot be released.

Optionally, the method further includes:
sending, by the fourth device, the third release response message to the first device, where the third release response message is used to indicate whether the communication resource is successfully released; and
in a case that the third release response message is used to indicate that the communication resource fails to be released, the third release response message includes a third cause value, and the third cause value includes at least one of the following: the communication resource does not exist, and the communication resource is in use and cannot be released.

Optionally, the method further includes:
in a case that the fourth device receives the fourth release request message sent by the first device and the release type is used to indicate to release the AI resource, sending, by the fourth device, the eleventh release request message to the third device; or
in a case that the fourth device receives the fourth release request message sent by the first device and the release type is used to indicate to release all resources, sending, by the fourth device, a thirteenth release request message to a ninth device, and/or sending, by the fourth device, the eleventh release request message to the third device, where the thirteenth release request message is used to request to release a communication bearer associated with the AI service.

A specific implementation process and technical effects of the method in this embodiment are the same as those in the method embodiment on the first device side. For details, refer to the detailed descriptions in the embodiment on the first device side. Details are not described herein again.

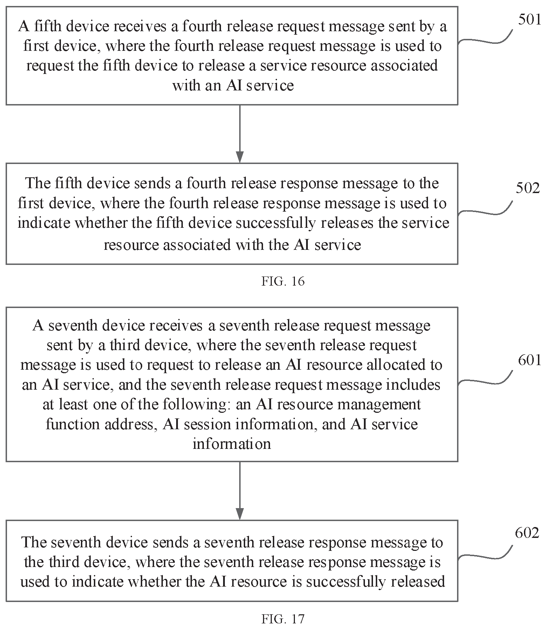

Referring to FIG. 16, an embodiment of this application provides an AI service release method. This embodiment is performed by a fifth device, and the AI service release method includes the following steps:
Step 501: The fifth device receives a fourth release request message sent by a first device, where the fourth release request message is used to request the fifth device to release a service resource associated with an AI service.
Step 502: The fifth device sends a fourth release response message to the first device, where the fourth release response message is used to indicate whether the fifth device successfully releases the service resource associated with the AI service.

Optionally, the fourth release request message includes at least one of the following:
a release requester identifier, an AI service information, a packet data unit PDU session information, an AI session information, a policy information, a network identifier information, a release cause, and a release type.

Optionally, the method further includes:
sending, by the fifth device, an eleventh release request message to a third device, where the eleventh release request message is used to request to release an AI resource allocated to the AI service; and
the eleventh release request message includes at least one of the following: a release requester identifier, an AI session information, and a PDU session information.

Optionally, the method further includes:
receiving, by the fifth device, an eleventh release response message sent by the third device, where the eleventh release response message is used to indicate whether the AI resource is successfully released; and
in a case that the eleventh release response message is used to indicate that the AI resource fails to be released, the eleventh release response message includes an eleventh cause value, and the eleventh cause value includes at least one of the following: the AI resource does not exist, and the AI resource is in use and cannot be released.

Optionally, the method further includes:
sending, by the fifth device, a fourteenth release request message to a fourth device, where the fourteenth release request message is used to request to release a communication resource associated with the AI service; and
the fourteenth release request message includes at least one of the following: a release requester identifier, a PDU session information, an AI session information, an AI service information, a network identifier information, a communication management function address, a release cause, and a policy information.

Optionally, the fifth device receives a fourteenth release response message sent by the fourth device, where the fourteenth release response message is used to indicate whether the communication resource is successfully released; and
in a case that the fourteenth release response message is used to indicate that the communication resource fails to be released, the fourteenth release response message includes a fourteenth cause value, and the fourteenth cause value includes at least one of the following: the communication resource does not exist, and the communication resource is in use and cannot be released.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

A specific implementation process and technical effects of the method in this embodiment are the same as those in the method embodiment on the first device side. For details, refer to the detailed descriptions in the embodiment on the first device side. Details are not described herein again.

Referring to FIG. 17, an embodiment of this application provides an AI service release method. This embodiment is performed by a seventhfifth device, and the AI service release method includes the following steps:
Step 601: The seventh device receives a seventh release request message sent by a third device, where the seventh release request message is used to request to release an AI resource allocated to an AI service, and the seventh release request message includes at least one of the following: an AI resource management function address, an AI session information, and an AI service information.
Step 602: The seventh device sends a seventh release response message to the third device, where the seventh release response message is used to indicate whether the AI resource is successfully released.

Optionally, in a case that the seventh release response message is used to indicate that the AI resource fails to be released, the seventh release response message includes a seventh cause value, and the seventh cause value includes at least one of the following: the AI resource does not exist, and the AI resource is in use and cannot be released.

Optionally, the method further includes:
sending, by the seventh device, a fifteenth release request message to an eighth device, where the fifteenth release request message is used to request to release an AI bearer associated with the AI service; and
the fifteenth release request message includes at least one of the following: an AI resource node address, an AI session information, and an AI service information.

Optionally, the method further includes:
receiving, by the seventh device, a fifteenth release response message sent by the eighth device, where the fifteenth release response message is used to indicate whether the AI bearer is successfully released; and
in a case that the fifteenth release response message is used to indicate that the AI bearer fails to be released, the fifteenth release response message includes a fifteenth cause value, and the fifteenth cause value includes at least one of the following: the AI bearer does not exist, and the AI bearer is in use and cannot be released.

A specific implementation process and technical effects of the method in this embodiment are the same as those in the method embodiment on the first device side. For details, refer to the detailed descriptions in the embodiment on the first device side. Details are not described herein again.

The AI service release method provided in the embodiments of this application may be performed by an AI service release apparatus. In the embodiments of this application, an example in which the AI service release apparatus performs the AI service release method is used to describe the AI service release apparatus provided in the embodiments of this application.

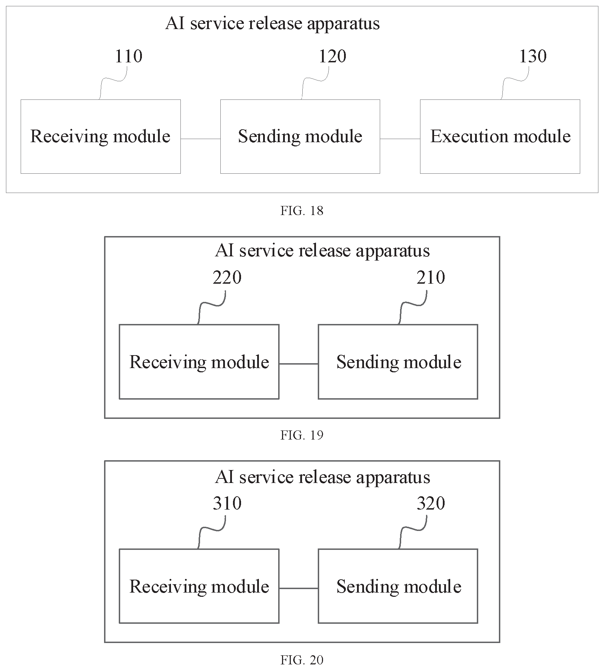

FIG. 18 is a schematic diagram 1 of a structure of an AI service release apparatus according to an embodiment of this application. As shown in FIG. 18, the AI service release apparatus includes:
a receiving module 110, configured to receive a first release request message sent by a second device, where the first release request message is used to request to release a service resource associated with an artificial intelligence AI service;
a sending module 120, configured to send a first release response message to the second device, where the first release response message is used to indicate whether the service resource associated with the AI service is successfully released; and
an execution module 130, configured to perform at least one of the following operations based on the first release request message:
   determining at least one of a third device, a fourth device, and a fifth device associated with the AI service;
   sending a second release request message to the third device, where the second release request message is used to request to release an AI resource allocated to the AI service;
   sending a third release request message to the fourth device, where the third release request message is used to request to release a communication resource allocated to the AI service; and
   sending a fourth release request message to the third device, the fourth device, or the fifth device, where the fourth release request message is used to request the third device, the fourth device, or the fifth device to release the service resource associated with the AI service.

Optionally, the first release request message includes at least one of the following:
a release requester identifier, an AI service information, a packet data unit PDU session information, an AI session information, a policy information, a network identifier information, a release cause, and a release type.

Optionally, in a case that the first release response message is used to indicate that the service resource associated with the AI service fails to be released, the first release response message includes a first cause value, and the first cause value includes at least one of the following: the AI service does not exist, the AI service is in use and cannot be released, the communication resource fails to be released, and the AI resource fails to be released.

Optionally, the second release request message includes at least one of the following: a release requester identifier, an AI service information, a PDU session information, an AI session information, an AI service management function address, a policy information, and a release cause; and
the third release request message includes at least one of the following: a release requester identifier, an AI service information, a PDU session information, an AI session information, a network identifier information, a communication management function address, a policy information, and a release cause.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the network identifier information includes at least one of the following: a slice identifier and a data network name DNN;
the policy information includes at least one of the following: an AI policy identifier, a communication policy identifier, a comprehensive policy identifier, and a policy charging function address; and
the release cause includes at least one of the following: a normal release, a temporary release, and a release due to service resource switching.

Optionally, the fourth release request message includes at least one parameter in the first release request message.

Optionally, in a case that the first release response message is used to indicate that the service resource associated with the AI service fails to be released, the first release response message includes a first cause value, and the first cause value includes at least one of the following: the AI service does not exist, the AI service is in use and cannot be released, the communication resource fails to be released, and the AI resource fails to be released.

Optionally, the receiving module 110 is further configured to:
receive a second release response message sent by the third device, where the second release response message is used to indicate whether the AI resource is successfully released; and
in a case that the second release response message is used to indicate that the AI resource fails to be released, the second release response message includes a second cause value, and the second cause value includes at least one of the following: the AI resource does not exist, and the AI resource is in use and cannot be released.

Optionally, the receiving module 110 is further configured to:
receive a third release response message sent by the fourth device, where the third release response message is used to indicate whether the communication resource is successfully released; and
in a case that the third release response message is used to indicate that the communication resource fails to be released, the third release response message includes a third cause value, and the third cause value includes at least one of the following: the communication resource does not exist, and the communication resource is in use and cannot be released.

Optionally, the receiving module 110 is further configured to:
receive a fourth release response message sent by the third device, the fourth device, or the fifth device, where the fourth release response message is used to indicate whether the service resource associated with the AI service is successfully released; and
in a case that the fourth release response message is used to indicate that the service resource fails to be released, the fourth release response message includes a fourth cause value, and the fourth cause value includes at least one of the following: the AI service does not exist, the communication resource fails to be released, the AI resource fails to be released, and the AI service is in use and cannot be released.

Optionally, a protocol stack of the second device includes at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

Optionally, the second device is a terminal or a network side device, and the network side device includes at least one of the following: a policy charging function PCF, an access and mobility management function AMF, a session management function SMF, an application server, and an NEF.

The apparatus according to this embodiment may be configured to perform the method according to any one of the aforementioned method embodiments of the first device side. A specific implementation process and technical effects of the apparatus in this embodiment are the same as those in the method embodiments of the first device side. For details, reference may be made to the detailed descriptions in the embodiments of the first device side. Details are not described herein.

FIG. 19 is a schematic diagram 2 of a structure of an AI service release apparatus according to an embodiment of this application. As shown in FIG. 19, the AI service release apparatus includes:
a sending module 210, configured to send a first release request message to a first device, where the first release request message is used to request to release a service resource associated with an AI service; and
a receiving module 220, configured to receive a first release response message sent by the first device, where the first release response message is used to indicate whether the service resource associated with the AI service is successfully released.

Optionally, the first release request message includes at least one of the following:
a release requester identifier, an AI service information, a packet data unit PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

Optionally, in a case that the first release response message is used to indicate that the service resource associated with the AI service fails to be released, the first release response message includes a first cause value, and the first cause value includes at least one of the following: the AI service does not exist, the AI service is in use and cannot be released, the communication resource fails to be released, and the AI resource fails to be released.

Optionally, a protocol stack of the second device includes at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

Optionally, the second device is a terminal or a network side device, and the network side device includes at least one of the following: a policy charging function PCF, an access and mobility management function AMF, a session management function SMF, an application server, and an NEF.

The apparatus according to this embodiment may be configured to perform the method according to any one of the aforementioned method embodiments of the second device side. A specific implementation process and technical effects of the apparatus in this embodiment are the same as those in the method embodiments of the second device side. For details, reference may be made to the detailed descriptions in the embodiments of the second device side. Details are not described herein.

FIG. 20 is a schematic diagram 3 of a structure of an AI service release apparatus according to an embodiment of this application. As shown in FIG. 20, the AI service release apparatus includes:
a receiving module 310, configured to receive a second release request message sent by a first device, where the second release request message is used to request a third device to release an AI resource allocated to an AI service; and
a sending module 320, configured to send a second release response message to the first device, where the second release response message is used to indicate whether the AI resource is successfully released;
   or
the receiving module 310, configured to receive a fourth release request message sent by a first device, where the fourth release request message is used to request a third device to release a service resource associated with an AI service; and
the sending module 320, configured to send a fourth release response message to the first device, where the fourth release response message is used to indicate whether the third device successfully releases the service resource associated with the AI service.

Optionally, the second release request message includes at least one of the following: a release requester identifier, an AI service information, a PDU session information, an AI session information, an AI service management function address, a policy information, and a release cause.

Optionally, the fourth release request message includes at least one of the following:
a release requester identifier, an AI service information, a PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

Optionally, the sending module 320 is further configured to:
send a fifth release request message to a fifth device, where the fifth release request message is used to request to release an AI policy associated with the AI service; and
the fifth release request message includes at least one of the following: a release requester identifier, an AI policy identifier, an AI session information, a network resource identifier, a PDU session information, an AI service information, a release cause, and a policy information.

Optionally, the receiving module 310 is further configured to:
receive a fifth release response message sent by the fifth device, where the fifth release response message is used to indicate whether the AI policy associated with the AI service is successfully released; and
in a case that the fifth release response message is used to indicate that the AI policy associated with the AI service fails to be released, the fifth release response message includes a fifth cause value, and the fifth cause value includes at least one of the following: the AI policy does not exist, and the AI policy is in use and cannot be released.

Optionally, the apparatus further includes:
a processing module, used by the third device to cancel, based on an AI policy associated with the AI service and a release requester identifier associated with the AI policy, an association relationship between a release requester and the AI policy from a local context of the third device.

Optionally, the sending module 320 is further configured to:
send a sixth release request message to a sixth device, where the sixth release request message is used to request to release an association status between a model and the AI service or release an association status between a model and a user; and
the sixth release request message includes at least one of the following: a release requester identifier, an AI service identifier, an AI service description, a model subscription correlation identifier, a model identifier, and an AI model management function address.

Optionally, the sending module 320 is further configured to:
send a seventh release request message to a seventh device, where the seventh release request message is used to request to release the AI resource allocated to the AI service, and the seventh release request message includes at least one of the following: an AI resource management function address, an AI session information, and an AI service information.

Optionally, the sending module 320 is specifically configured to:
in a case that a preset condition is met, send, by the third device, the sixth release request message to the sixth device, where
the preset condition includes at least one of the following:
   the sixth release request message includes the model identifier; and
   the sixth release request message includes the model subscription correlation identifier.

Optionally, the receiving module 310 is further configured to:
receive a sixth release response message sent by the sixth device, where the sixth release response message is used to indicate whether the association status corresponding to the model is successfully released.

Optionally, the receiving module 310 is further configured to:
receive a seventh release response message sent by the seventh device, where the seventh release response message is used to indicate whether the AI resource is successfully released; and
in a case that the seventh release response message is used to indicate that the AI resource fails to be released, the seventh release response message includes a seventh cause value, and the seventh cause value includes at least one of the following: the AI resource does not exist, and the AI resource is in use and cannot be released.

Optionally, the sending module 320 is specifically configured to:
in a case that the fourth release request message sent by the first device is received, send a ninth release request message to the fifth device, where the ninth release request message is used to request to release an AI policy and/or a communication policy associated with the AI service; and
the ninth release request message includes at least one of the following: a release requester identifier, an AI policy identifier, a communication policy identifier, an AI session information, a PDU session information, a network resource identifier, an AI service information, a release cause, and a policy information.

Optionally, the receiving module 310 is further configured to:
receive a ninth release response message sent by the fifth device, where the ninth release response message is used to indicate whether the AI policy and/or the communication policy are/is successfully released; and
in a case that the ninth release response message is used to indicate that the AI policy and/or the communication policy fail/fails to be released, the ninth release response message includes an eighth cause value, and the eighth cause value includes at least one of the following: the AI policy does not exist, the AI policy is in use and cannot be released, the communication policy does not exist, and the communication policy is in use and cannot be released.

Optionally, the sending module 320 is further configured to:
in the case that the fourth release request message sent by the first device is received, send an eighth release request message to a fourth device, where the eighth release request message is used to request to release a communication resource allocated to the AI service; and
the eighth release request message includes at least one of the following: a release requester identifier, a PDU session information, an AI session information, an AI service information, a network identifier information, a communication management function address, a release cause, and a policy information.

Optionally, the receiving module 310 is further configured to:
receive an eighth release response message sent by the fourth device, where the eighth release response message is used to indicate whether the communication resource is successfully released; and
in a case that the eighth release response message is used to indicate that the communication resource fails to be released, the eighth release response message includes an eighth cause value, and the eighth cause value includes at least one of the following: the communication resource does not exist, and the communication resource is in use and cannot be released.

Optionally, in a case that the second release response message is used to indicate that the AI resource fails to be released, the second release response message includes a second cause value, and the second cause value includes at least one of the following: the AI resource does not exist, and the AI resource is in use and cannot be released.

Optionally, the receiving module 310 is further configured to:
in a case that the second release request message sent by the first device is received, receive a status notification message sent by the fourth device, where the status notification message is used to notify a resource release status; and
the status notification message includes at least one of the following:
   a release requester identifier, an AI service management function address, a communication management function address, a PDU session information, an AI session information, an AI service information, a status indication, and a failure cause, where
   the status indication is used to indicate whether the AI resource or the communication resource of the AI service is successfully released.

Optionally, the sending module 320 is further configured to:
in a case that the fourth release request message sent by the first device is received and the release type is used to indicate to release the communication resource, send the eighth release request message to the fourth device; or
in a case that the fourth release request message sent by the first device is received and the release type is used to indicate to release all the resources, send the seventh release request message to the seventh device, and/or sending, by the third device, the eighth release request message to the fourth device.

The apparatus according to this embodiment may be configured to perform the method according to any one of the aforementioned method embodiments of the third device side. A specific implementation process and technical effects of the apparatus in this embodiment are the same as those in the method embodiments of the third device side. For details, reference may be made to the detailed descriptions in the embodiments of the third device side. Details are not described herein.

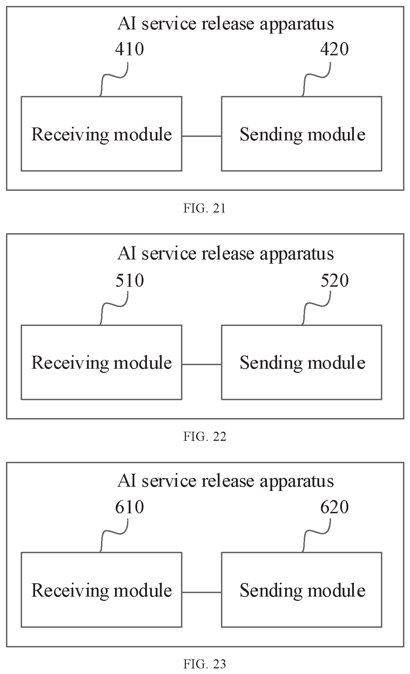

FIG. 21 is a schematic diagram 4 of a structure of an AI service release apparatus according to an embodiment of this application. As shown in FIG. 21, the AI service release apparatus includes:
a receiving module 410, configured to receive a third release request message sent by a first device, where the third release request message is used by a fourth device to release a communication resource allocated to an AI service; and
a sending module 420, configured to send a third release response message to the first device, where the third release response message is used to indicate whether the communication resource is successfully released;
   or
the receiving module 410, configured to receive a fourth release request message sent by a first device, where the fourth release request message is used to request a fourth device to release a service resource associated with an AI service; and
the sending module 420, configured to send a fourth release response message to the first device, where the fourth release response message is used to indicate whether the fourth device successfully releases the service resource associated with the AI service.

Optionally, the third release request message includes at least one of the following: a release requester identifier, an AI service information, a PDU session information, an AI session information, a network identifier information, a communication management function address, a policy information, and a release cause.

Optionally, the fourth release request message includes at least one of the following:
a release requester identifier, an AI service information, a packet data unit PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the network identifier information includes at least one of the following: a slice identifier and a data network name DNN;
the policy information includes at least one of the following: an AI policy identifier, a communication policy identifier, a comprehensive policy identifier, and a policy charging function address; and
the release cause includes at least one of the following: a normal release, a temporary release, and a release due to service resource switching.

Optionally, the sending module 420 is further configured to:
in a case that the third release request message sent by the first device is received, send a tenth release request message to a fifth device, where the tenth release request message is used to request to release a communication policy associated with the AI service; and
the tenth release request message includes at least one of the following: a release requester identifier, a communication policy identifier, a PDU session information, a network resource identifier, an AI session information, an AI service information, a release cause, and a policy information.

Optionally, the receiving module 410 is further configured to:
receive a tenth release response message sent by the fifth device, where the tenth release response message is used to indicate whether the communication policy associated with the AI service is successfully released; and
in a case that the tenth release response message is used to indicate that the communication policy fails to be released, the tenth release response message includes a tenth cause value, and the tenth cause value includes at least one of the following: the communication policy does not exist, and the communication policy is in use and cannot be released.

Optionally, the sending module 420 is further configured to:
in a case that the fourth release request message sent by the first device is received, send a twelfth release request message to the fifth device, where the twelfth release request message is used to request to release an AI policy and/or a communication policy associated with the AI service; and
the twelfth release request message includes at least one of the following: a release requester identifier, a communication policy identifier, an AI policy identifier, a PDU session information, an AI session information, a network resource identifier, an AI service information, a release cause, and a policy information.

Optionally, the receiving module 410 is further configured to:
in the case that the fourth release request message sent by the first device is received, send an eleventh release request message to a third device, where the eleventh release request message is used to request to release an AI resource allocated to the AI service; and
the eleventh release request message includes at least one of the following: a release requester identifier, an AI session information, and a PDU session information.

Optionally, the receiving module 410 is further configured to:
receive an eleventh release response message sent by the third device, where the eleventh release response message is used to indicate whether the AI resource is successfully released; and
in a case that the eleventh release response message is used to indicate that the AI resource fails to be released, the eleventh release response message includes an eleventh cause value, and the eleventh cause value includes at least one of the following: the AI resource does not exist, and the AI resource is in use and cannot be released.

Optionally, the sending module 420 is further configured to:
send the third release response message to the first device, where the third release response message is used to indicate whether the communication resource is successfully released; and
in a case that the third release response message is used to indicate that the communication resource fails to be released, the third release response message includes a third cause value, and the third cause value includes at least one of the following: the communication resource does not exist, and the communication resource is in use and cannot be released.

Optionally, the sending module 420 is further configured to:
in a case that the fourth release request message sent by the first device is received and the release type is used to indicate to release the AI resource, send the eleventh release request message to the third device; or
in a case that the fourth release request message sent by the first device is received and the release type is used to indicate to release all resources, send a thirteenth release request message to a ninth device, and/or send, by the fourth device, the eleventh release request message to the third device, where the thirteenth release request message is used to request to release a communication bearer associated with the AI service.

The apparatus according to this embodiment may be configured to perform the method according to any one of the aforementioned method embodiments of the fourth device side. A specific implementation process and technical effects of the apparatus in this embodiment are the same as those in the method embodiments of the fourth device side. For details, reference may be made to the detailed descriptions in the embodiments of the fourth device side. Details are not described herein.

FIG. 22 is a schematic diagram 5 of a structure of an AI service release apparatus according to an embodiment of this application. As shown in FIG. 22, the AI service release apparatus includes:
a receiving module 510, configured to receive a fourth release request message sent by a first device, where the fourth release request message is used to request a fifth device to release a service resource associated with the AI service; and
a sending module 520, configured to send a fourth release response message to the first device, where the fourth release response message is used to indicate whether the fifth device successfully releases the service resource associated with the AI service.

Optionally, the fourth release request message includes at least one of the following:
a release requester identifier, an AI service information, a packet data unit PDU session information, an AI session information, a policy information, a network identifier information, a release cause, and a release type.

Optionally, the sending module 520 is further configured to:
send an eleventh release request message to a third device, where the eleventh release request message is used to request to release an AI resource allocated to the AI service; and
the eleventh release request message includes at least one of the following: a release requester identifier, an AI session information, and a PDU session information.

Optionally, the receiving module 510 is further configured to:
receive an eleventh release response message sent by the third device, where the eleventh release response message is used to indicate whether the AI resource is successfully released; and
in a case that the eleventh release response message is used to indicate that the AI resource fails to be released, the eleventh release response message includes an eleventh cause value, and the eleventh cause value includes at least one of the following: the AI resource does not exist, and the AI resource is in use and cannot be released.

Optionally, the sending module 520 is further configured to:
send a fourteenth release request message to a fourth device, where the fourteenth release request message is used to request to release a communication resource associated with the AI service; and
the fourteenth release request message includes at least one of the following: a release requester identifier, a PDU session information, an AI session information, an AI service information, a network identifier information, a communication management function address, a release cause, and a policy information.

Optionally, the receiving module 510 is further configured to:
receive a fourteenth release response message sent by the fourth device, where the fourteenth release response message is used to indicate whether the communication resource is successfully released; and
in a case that the fourteenth release response message is used to indicate that the communication resource fails to be released, the fourteenth release response message includes a fourteenth cause value, and the fourteenth cause value includes at least one of the following: the communication resource does not exist, and the communication resource is in use and cannot be released.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

The apparatus according to this embodiment may be configured to perform the method according to any one of the aforementioned method embodiments of the fifth device side. A specific implementation process and technical effects of the apparatus in this embodiment are the same as those in the method embodiments of the fifth device side. For details, reference may be made to the detailed descriptions in the embodiments of the fifth device side. Details are not described herein.

FIG. 23 is a schematic diagram 6 of a structure of an AI service release apparatus according to an embodiment of this application. As shown in FIG. 23, the AI service release apparatus includes:
a receiving module 710, configured to receive a seventh release request message sent by a third device, where the seventh release request message is used to request to release an AI resource allocated to an AI service, and the seventh release request message includes at least one of the following: an AI resource management function address, an AI session information, and an AI service information; and
a sending module 720, configured to send a seventh release response message to the third device, where the seventh release response message is used to indicate whether the AI resource is successfully released.

Optionally, in a case that the seventh release response message is used to indicate that the AI resource fails to be released, the seventh release response message includes a seventh cause value, and the seventh cause value includes at least one of the following: the AI resource does not exist, and the AI resource is in use and cannot be released.

Optionally, the sending module 720 is further configured to:
send a fifteenth release request message to an eighth device, where the fifteenth release request message is used to request to release an AI bearer associated with the AI service; and
the fifteenth release request message includes at least one of the following: an AI resource node address, an AI session information, and an AI service information.

Optionally, the receiving module 710 is further configured to:
receive a fifteenth release response message sent by the eighth device, where the fifteenth release response message is used to indicate whether the AI bearer is successfully released; and
in a case that the fifteenth release response message is used to indicate that the AI bearer fails to be released, the fifteenth release response message includes a fifteenth cause value, and the fifteenth cause value includes at least one of the following: the AI bearer does not exist, and the AI bearer is in use and cannot be released.

The apparatus according to this embodiment may be configured to perform the method according to any one of the aforementioned method embodiments of the seventh device side. A specific implementation process and technical effects of the apparatus in this embodiment are the same as those in the method embodiments of the seventh device side. For details, reference may be made to the detailed descriptions in the embodiments of the seventh device side. Details are not described herein.

The AI service release apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The AI service release apparatus provided in this embodiment of this application can implement the processes implemented in the method embodiments in FIG. 2 to FIG. 17, and achieve same technical effects. To avoid repetition, details are not described herein again.

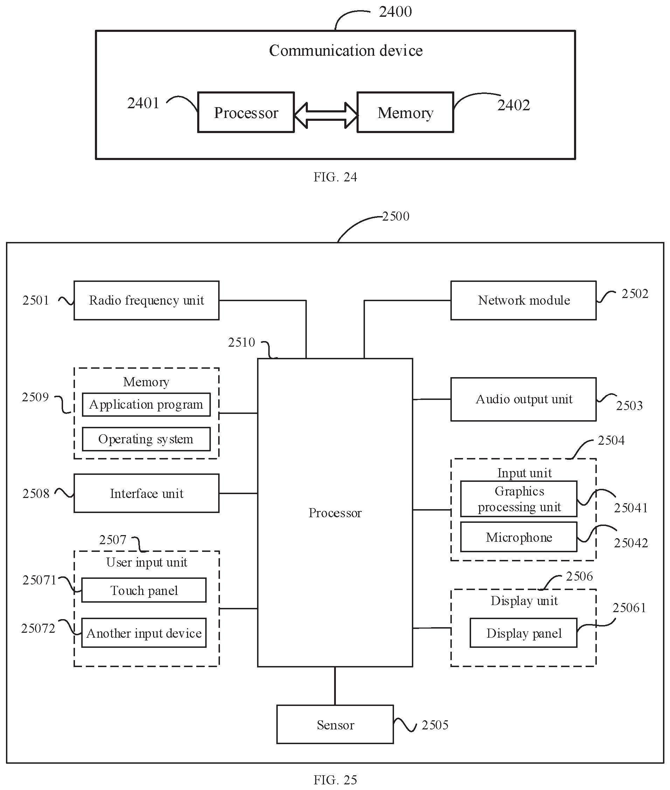

As shown in FIG. 24, an embodiment of this application further provides a communication device 2400, including a processor 2401 and a memory 2402. The memory 2402 stores a program or instructions capable of running on the processor 2401. For example, when the communication device 2400 is a terminal, the program or the instructions are executed by the processor 2401 to implement the steps in the foregoing embodiments of the AI service release method, and the same technical effects can be achieved. When the communication device 2400 is a network side device, the program or the instructions are executed by the processor 2401 to implement the steps in the foregoing embodiments of the AI service release method, and the same technical effects can be achieved. To avoid repetition, details are not described herein again.

An embodiment of this application further provides a terminal, including a processor and a communication interface. The communication interface is coupled to the processor. The processor is configured to run a program or instructions to implement the steps in the method embodiment shown in FIG. 13. The terminal embodiment corresponds to the foregoing terminal-side method embodiment. Each implementation process and implementation of the foregoing method embodiment may be applied to the terminal embodiment, and same technical effects can be achieved. Specifically, FIG. 25 is a schematic diagram of a hardware structure of a terminal for implementing an embodiment of this application.

The terminal 2500 includes but is not limited to at least some components in a radio frequency unit 2501, a network module 2502, an audio output unit 2503, an input unit 2504, a sensor 2505, a display unit 2506, a user input unit 2507, an interface unit 2508, a memory 2509, and a processor 2510.

A person skilled in the art may understand that the terminal 2500 may further include a power supply (for example, a battery) that supplies power to each component. The power supply may be logically connected to the processor 2510 by using a power management system, to implement functions such as charging management, discharging management, and power consumption management through the power management system. The structure of the terminal shown in FIG. 25 does not constitute a limitation on the terminal. The terminal may include more or fewer components than those shown in the figure, or combine some components, or have different component arrangements. Details are not described herein again.

It should be understood that in this embodiment of this application, the input unit 2504 may include a graphics processing unit (Graphics Processing Unit, GPU) 25041 and a microphone 25042. The graphics processing unit 25041 processes image data of a still picture or a video obtained by an image capture apparatus (such as a camera) in a video capture mode or an image capture mode. The display unit 2506 may include a display panel 25061, and the display panel 25061 may be configured in a form of a liquid crystal display, an organic light-emitting diode, or the like. The user input unit 2507 includes at least one of a touch panel 25071 and another input device 25072. The touch panel 25071 is also referred to as a touchscreen. The touch panel 25071 may include two parts: a touch detection apparatus and a touch controller. The another input device 25072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 2501 may transmit the downlink data to the processor 2510 for processing. In addition, the radio frequency unit 2501 may send uplink data to the network side device. Generally, the radio frequency unit 2501 includes but is not limited to an antenna, an amplifier, a transceiver, a coupler, a low-noise amplifier, a duplexer, and the like.

The memory 2509 may be configured to store a software program or instructions and various types of data. The memory 2509 may mainly include a first storage area for storing a program or instructions and a second storage area for storing data. The first storage area may store an operating system, an application program or instructions required by at least one function (for example, a sound play function or an image play function), and the like. In addition, the memory 2509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 2509 in this embodiment of this application includes but is not limited to these memories and any other suitable type of memory.

The processor 2510 may include one or more processing units. Optionally, the processor 2510 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 2510.

The radio frequency unit 2501 is configured to send a first release request message to a first device, where the first release request message is used to request to release a service resource associated with an AI service.

The radio frequency unit 2501 is further configured to receive a first release response message sent by the first device, where the first release response message is used to indicate whether the service resource associated with the AI service is successfully released.

Optionally, the first release request message includes at least one of the following:
a release requester identifier, an AI service information, a packet data unit PDU session information, an AI session information, a policy information, a network identifier information, a release cause, and a release type.

Optionally, the release requester identifier includes at least one of the following: a terminal identifier, and a network device identifier;
the AI service information includes at least one of the following: an AI service identifier, an AI service description, a model subscription correlation identifier, and a model identifier;
the PDU session information includes at least one of the following: a PDU session identifier, a PDU session type, a communication resource identifier, and a communication resource node address;
the AI session information includes at least one of the following: an AI session identifier, an AI session type, an AI resource identifier, and an AI resource node address;
the policy information includes at least one of the following: an AI policy identifier, a communication policy identifier, a comprehensive policy identifier, and a policy charging function address;
the network identifier information includes at least one of the following: a slice identifier and a data network name DNN;
the release cause includes at least one of the following: a normal release, a temporary release, and a release due to service resource switching; and
the release type includes at least one of the following: a releasing a communication resource, a releasing an AI resource, and a releasing all resources.

Optionally, in a case that the first release response message is used to indicate that the service resource associated with the AI service fails to be released, the first release response message includes a first cause value, and the first cause value includes at least one of the following: the AI service does not exist, the AI service is in use and cannot be released, the communication resource fails to be released, and the AI resource fails to be released.

Optionally, a protocol stack of the second device includes at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

It may be understood that for implementation processes of the implementations mentioned in this embodiment, reference may be made to related descriptions in the method embodiment, and same or corresponding technical effects are achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 2 to FIG. 17. The network side device embodiment corresponds to the foregoing method embodiment for the network side device. Each implementation process and implementation of the foregoing method embodiment may be applied to the network side device embodiment, and the same technical effects can be achieved.

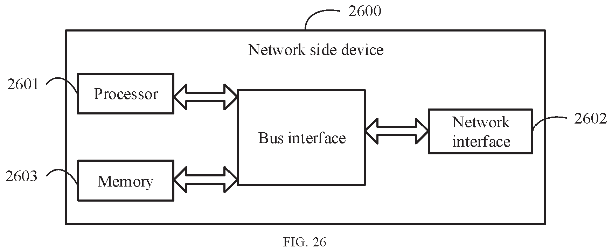

Specifically, an embodiment of this application further provides a network side device. As shown in FIG. 26, the network side device 2600 includes a processor 2601, a network interface 2602, and a memory 2603. The network interface 2602 is, for example, a common public radio interface (common public radio interface, CPRI).

Specifically, the network side device 2600 in this embodiment of this application further includes instructions or a program stored in the memory 2603 and capable of running on the processor 2601. The processor 2601 invokes the instructions or the program in the memory 2603 to perform the method performed by the modules shown in FIG. 18 to FIG. 23, and same technical effects are achieved. To avoid repetition, details are not described herein again.

An embodiment of this application further provides a readable storage medium. The readable storage medium stores a program or instructions. When the program or the instructions are executed by a processor, processes in the foregoing embodiments of the AI service release method are implemented, and the same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, the communication interface is coupled to the processor, the processor is configured to run a program or instructions to implement the processes in the foregoing embodiments of the AI service release method, and same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing embodiments of the AI service release method, and same technical effects can be achieved. To avoid repetition, details are not described herein again.

An embodiment of this application further provides a communication system, including: a second device, a first device, a third device, a fourth device, a fifth device, and a seventh device. The second device may be configured to perform the steps of the AI service release method described above. The first device may be configured to perform the steps of the AI service release method described above. The third device may be configured to perform the steps of the AI service release method described above. The fourth device may be configured to perform the steps of the AI service release method described above. The fifth device may be configured to perform the steps of the AI service release method described above. The seventh device may be configured to perform the steps of the AI service release method described above.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An AI service release method, comprising:
receiving, by a first device, a first release request message sent by a second device, wherein the first release request message is used to request to release a service resource associated with an artificial intelligence AI service;
sending, by the first device, a first release response message to the second device, wherein the first release response message is used to indicate whether the service resource associated with the AI service is successfully released; and
performing, by the first device, at least one of the following operations based on the first release request message:
determining at least one of a third device, a fourth device, and a fifth device associated with the AI service;
sending a second release request message to the third device, wherein the second release request message is used to request to release an AIresource allocated to the AI service;
sending a third release request message to the fourth device, wherein the third release request message is used to request to release a communication resource allocated to the AI service; and
sending a fourth release request message to the third device, the fourth device, or the fifth device, wherein the fourth release request message is used to request the third device, the fourth device, or the fifth device to release the service resource associated with the AI service.

2. The method according to claim 1, wherein the first release request message comprises at least one of the following:
a release requester identifier, an AI service information, a packet data unit PDU session information, an AI session information, a policy information, a network identifier information, a release cause, and a release type.

3. The method according to claim 1 or 2, wherein in a case that the first release response message is used to indicate that the service resource associated with the AI service fails to be released, the first release response message comprises a first cause value, and the first cause value comprises at least one of the following: the AI service does not exist, the AI service is in use and cannot be released, the communication resource fails to be released, and the AI resource fails to be released.

4. The method according to any one of claims 1 to 3, wherein the second release request message comprises at least one of the following: a release requester identifier, an AI service information, a PDU session information, an AI session information, an AI service management function address, a policy information, and a release cause; and
the third release request message comprises at least one of the following: a release requester identifier, an AI service information, a PDU session information, an AI session information, a network identifier information, a communication management function address, a policy information, and a release cause.

5. The method according to any one of claims 2 to 4, wherein the release requester identifier comprises at least one of the following: a terminal identifier, and a network device identifier;
the AI service information comprises at least one of the following: an AI service identifier, an AI service description, a model subscription correlation identifier, and a model identifier;
the PDU session information comprises at least one of the following: a PDU session identifier, a PDU session type, a communication resource identifier, and a communication resource node address;
the AI session information comprises at least one of the following: an AI session identifier, an AI session type, an AI resource identifier, and an AI resource node address;
the network identifier information comprises at least one of the following: a slice identifier and a data network name DNN;
the policy information comprises at least one of the following: an AI policy identifier, a communication policy identifier, a comprehensive policy identifier, and a policy charging function address; and
the release cause comprises at least one of the following: a normal release, a temporary release, and a release due to service resource switching.

6. The method according to any one of claims 1 to 5, wherein the fourth release request message comprises at least one parameter in the first release request message.

7. The method according to any one of claims 1 to 6, wherein in a case that the first release response message is used to indicate that the service resource associated with the AI service fails to be released, the first release response message comprises a first cause value, and the first cause value comprises at least one of the following: the AI service does not exist, the AI service is in use and cannot be released, the communication resource fails to be released, and the AI resource fails to be released.

8. The method according to any one of claims 1 to 7, wherein the method further comprises:
receiving, by the first device, a second release response message sent by the third device, wherein the second release response message is used to indicate whether the AI resource is successfully released; and
in a case that the second release response message is used to indicate that the AI resource fails to be released, the second release response message comprises a second cause value, and the second cause value comprises at least one of the following: the AI resource does not exist, and the AI resource is in use and cannot be released.

9. The method according to any one of claims 1 to 8, wherein the method further comprises:
receiving, by the first device, a third release response message sent by the fourth device, wherein the third release response message is used to indicate whether the communication resource is successfully released; and
in a case that the third release response message is used to indicate that the communication resource fails to be released, the third release response message comprises a third cause value, and the third cause value comprises at least one of the following: the communication resource does not exist, and the communication resource is in use and cannot be released.

10. The method according to any one of claims 1 to 9, wherein the method further comprises:
receiving, by the first device, a fourth release response message sent by the third device, the fourth device, or the fifth device, wherein the fourth release response message is used to indicate whether the service resource associated with the AI service is successfully released; and
in a case that the fourth release response message is used to indicate that the service resource fails to be released, the fourth release response message comprises a fourth cause value, and the fourth cause value comprises at least one of the following: the AI service does not exist, the communication resource fails to be released, the AI resource fails to be released, and the AI service is in use and cannot be released.

11. The method according to any one of claims 1 to 10, wherein
a protocol stack of the second device comprises at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

12. The method according to any one of claims 1 to 11, wherein the second device is a terminal or a network side device, and the network side device comprises at least one of the following: a policy charging function PCF, an access and mobility management function AMF, a session management function SMF, an application server, and an NEF.

13. An AI service release method, comprising:
sending, by a second device, a first release request message to a first device, wherein the first release request message is used to request to release a service resource associated with an AI service; and
receiving, by the second device, a first release response message sent by the first device, wherein the first release response message is used to indicate whether the service resource associated with the AI service is successfully released.

14. The method according to claim 13, wherein
the first release request message comprises at least one of the following:
a release requester identifier, an AI service information, a packet data unit PDU session information, an AI session information, a policy information, a network identifier information, a release cause, and a release type.

15. The method according to claim 14, wherein
the release requester identifier comprises at least one of the following: a terminal identifier, and a network device identifier;
the AI service information comprises at least one of the following: an AI service identifier, an AI service description, a model subscription correlation identifier, and a model identifier;
the PDU session information comprises at least one of the following: a PDU session identifier, a PDU session type, a communication resource identifier, and a communication resource node address;
the AI session information comprises at least one of the following: an AI session identifier, an AI session type, an AI resource identifier, and an AI resource node address;
the policy information comprises at least one of the following: an AI policy identifier, a communication policy identifier, a comprehensive policy identifier, and a policy charging function address;
the network identifier information comprises at least one of the following: a slice identifier and a data network name DNN;
the release cause comprises at least one of the following: a normal release, a temporary release, and a release due to service resource switching; and
the release type comprises at least one of the following: a releasing a communication resource, a releasing an AI resource, and a releasing all resources.

16. The method according to any one of claims 13 to 15, wherein
in a case that the first release response message is used to indicate that the service resource associated with the AI service fails to be released, the first release response message comprises a first cause value, and the first cause value comprises at least one of the following: the AI service does not exist, the AI service is in use and cannot be released, the communication resource fails to be released, and the AI resource fails to be released.

17. The method according to any one of claims 13 to 16, wherein
a protocol stack of the second device comprises at least one of the following: an AI management layer, a non-access stratum session management NAS-SM, and a non-access stratum message management NAS-MM, the AI management layer is configured to generate a message related to releasing the AI resource, and the NAS-SM is configured to generate a message related to releasing the communication resource.

18. The method according to any one of claims 13 to 17, wherein the second device is a terminal or a network side device, and the network side device comprises at least one of the following: a policy charging function PCF, an access and mobility management function AMF, a session management function SMF, an application server, and an NEF.

19. An AI service release method, comprising:
receiving, by a third device, a second release request message sent by a first device, wherein the second release request message is used to request the third device to release an AI resource allocated to an AI service; and
sending, by the third device, a second release response message to the first device, wherein the second release response message is used to indicate whether the AI resource is successfully released;
or
receiving, by a third device, a fourth release request message sent by a first device, wherein the fourth release request message is used to request the third device to release a service resource associated with an AI service; and
sending, by the third device, a fourth release response message to the first device, wherein the fourth release response message is used to indicate whether the third device successfully releases the service resource associated with the AI service.

20. The method according to claim 19, wherein
the second release request message comprises at least one of the following: a release requester identifier, an AI service information, a PDU session information, an AI session information, an AI service management function address, a policy information, and a release cause.

21. The method according to claim 19 or 20, wherein
the fourth release request message comprises at least one of the following:
a release requester identifier, an AI service information, a PDU session information, an AI session information, a policy information, a network identifier information, a release cause, and a release type.

22. The method according to claim 20 or 21, wherein
the release requester identifier comprises at least one of the following: a terminal identifier, and a network device identifier;
the AI service information comprises at least one of the following: an AI service identifier, an AI service description, a model subscription correlation identifier, and a model identifier;
the PDU session information comprises at least one of the following: a PDU session identifier, a PDU session type, a communication resource identifier, and a communication resource node address;
the AI session information comprises at least one of the following: an AI session identifier, an AI session type, an AI resource identifier, and an AI resource node address;
the policy information comprises at least one of the following: an AI policy identifier, a communication policy identifier, a comprehensive policy identifier, and a policy charging function address;
the network identifier information comprises at least one of the following: a slice identifier and a data network name DNN;
the release cause comprises at least one of the following: a normal release, a temporary release, and a release due to service resource switching; and
the release type comprises at least one of the following: a releasing a communication resource, a releasing an AI resource, and a releasing all resources.

23. The method according to any one of claims 19 to 22, wherein the method further comprises:
sending, by the third device, a fifth release request message to a fifth device, wherein the fifth release request message is used to request to release an AI policy associated with the AI service; and
the fifth release request message comprises at least one of the following: a release requester identifier, an AI policy identifier, an AI session information, a network resource identifier, a PDU session information, an AI service information, a release cause, and a policy information.

24. The method according to claim 23, wherein the method further comprises:
receiving, by the third device, a fifth release response message sent by the fifth device, wherein the fifth release response message is used to indicate whether the AI policy associated with the AI service is successfully released; and
in a case that the fifth release response message is used to indicate that the AI policy associated with the AI service fails to be released, the fifth release response message comprises a fifth cause value, and the fifth cause value comprises at least one of the following: the AI policy does not exist, and the AI policy is in use and cannot be released.

25. The method according to any one of claims 19 to 22, wherein the method further comprises:
canceling, by the third device based on an AI policy associated with the AI service and a release requester identifier associated with the AI policy, an association relationship between a release requester and the AI policy from a local context of the third device.

26. The method according to any one of claims 19 to 25, wherein the method further comprises:
sending, by the third device, a sixth release request message to a sixth device, wherein the sixth release request message is used to request to release an association status between a model and the AI service or release an association status between a model and a user; and
the sixth release request message comprises at least one of the following: a release requester identifier, an AI service identifier, an AI service description, a model subscription correlation identifier, a model identifier, and an AI model management function address.

27. The method according to any one of claims 19 to 26, wherein the method further comprises:
sending, by the third device, a seventh release request message to a seventh device, wherein the seventh release request message is used to request to release the AI resource allocated to the AI service, and the seventh release request message comprises at least one of the following: an AI resource management function address, an AI session information, and an AI service information.

28. The method according to claim 26, wherein the sending, by the third device, a sixth release request message to a sixth device comprises:
in a case that a preset condition is met, sending, by the third device, the sixth release request message to the sixth device, wherein
the preset condition comprises at least one of the following:
the sixth release request message comprises the model identifier; and
the sixth release request message comprises the model subscription correlation identifier; and
the method further comprises:
receiving, by the third device, a sixth release response message sent by the sixth device, wherein the sixth release response message is used to indicate whether the association status corresponding to the model is successfully released.

29. The method according to claim 27, wherein the method further comprises:
receiving, by the third device, a seventh release response message sent by the seventh device, wherein the seventh release response message is used to indicate whether the AI resource is successfully released; and
in a case that the seventh release response message is used to indicate that the AI resource fails to be released, the seventh release response message comprises a seventh cause value, and the seventh cause value comprises at least one of the following: the AI resource does not exist, and the AI resource is in use and cannot be released.

30. The method according to any one of claims 19 to 22, wherein the method further comprises:
in a case that the third device receives the fourth release request message sent by the first device, sending, by the third device, a ninth release request message to the fifth device, wherein the ninth release request message is used to request to release an AI policy and/or a communication policy associated with the AI service; and
the ninth release request message comprises at least one of the following: a release requester identifier, an AI policy identifier, a communication policy identifier, an AI session information, a PDU session information, a network resource identifier, an AI service information, a release cause, and a policy information.

31. The method according to claim 30, wherein the method further comprises:
receiving, by the third device, a ninth release response message sent by the fifth device, wherein the ninth release response message is used to indicate whether the AI policy and/or the communication policy are/is successfully released; and
in a case that the ninth release response message is used to indicate that the AI policy and/or the communication policy fail/fails to be released, the ninth release response message comprises an eighth cause value, and the eighth cause value comprises at least one of the following: the AI policy does not exist, the AI policy is in use and cannot be released, the communication policy does not exist, and the communication policy is in use and cannot be released.

32. The method according to any one of claims 19 to 31, wherein the method further comprises:
in the case that the third device receives the fourth release request message sent by the first device, sending, by the third device, an eighth release request message to a fourth device, wherein the eighth release request message is used to request to release a communication resource allocated to the AI service; and
the eighth release request message comprises at least one of the following: a release requester identifier, a PDU session information, an AI session information, an AI service information, a network identifier information, a communication management function address, a release cause, and a policy information.

33. The method according to claim 32, wherein the method further comprises:
receiving, by the third device, an eighth release response message sent by the fourth device, wherein the eighth release response message is used to indicate whether the communication resource is successfully released; and
in a case that the eighth release response message is used to indicate that the communication resource fails to be released, the eighth release response message comprises an eighth cause value, and the eighth cause value comprises at least one of the following: the communication resource does not exist, and the communication resource is in use and cannot be released.

34. The method according to any one of claims 19 to 33, wherein
in a case that the second release response message is used to indicate that the AI resource fails to be released, the second release response message comprises a second cause value, and the second cause value comprises at least one of the following: the AI resource does not exist, and the AI resource is in use and cannot be released.

35. The method according to any one of claims 19 to 29, wherein the method further comprises:
in a case that the third device receives the second release request message sent by the first device, receiving, by the third device, a status notification message sent by the fourth device, wherein the status notification message is used to notify a resource release status; and
the status notification message comprises at least one of the following:
a release requester identifier, an AI service management function address, a communication management function address, a PDU session information, an AI session information, an AI service information, a status indication, and a failure cause, wherein
the status indication is used to indicate whether the AI resource or the communication resource of the AI service is successfully released.

36. The method according to any one of claims 19 to 35, wherein the method further comprises:
in a case that the third device receives the fourth release request message sent by the first device and the release type is used to indicate to release the communication resource, sending, by the third device, the eighth release request message to the fourth device; or
in a case that the third device receives the fourth release request message sent by the first device and the release type is used to indicate to release all the resources, sending, by the third device, the seventh release request message to the seventh device, and/or sending, by the third device, the eighth release request message to the fourth device.

37. An AI service release method, comprising:
receiving, by a fourth device, a third release request message sent by a first device, wherein the third release request message is used by the fourth device to release a communication resource allocated to an AI service; and
sending, by the fourth device, a third release response message to the first device, wherein the third release response message is used to indicate whether the communication resource is successfully released;
or
receiving, by a fourth device, a fourth release request message sent by a first device, wherein the fourth release request message is used to request the fourth device to release a service resource associated with an AI service; and
sending, by the fourth device, a fourth release response message to the first device, wherein the fourth release response message is used to indicate whether the fourth device successfully releases the service resource associated with the AI service.

38. The method according to claim 37, wherein
the third release request message comprises at least one of the following: a release requester identifier, an AI service information, a PDU session information, an AI session information, a network identifier information, a communication management function address, a policy information, and a release cause.

39. The method according to claim 37 or 38, wherein
the fourth release request message comprises at least one of the following:
a release requester identifier, an AI service information, a packet data unit PDU session information, an AI session information, a policy information, a network identifier information, arelease cause, and a release type.

40. The method according to claim 38 or 39, wherein
the release requester identifier comprises at least one of the following: a terminal identifier, and a network device identifier;
the AI service information comprises at least one of the following: an AI service identifier, an AI service description, a model subscription correlation identifier, and a model identifier;
the PDU session information comprises at least one of the following: a PDU session identifier, a PDU session type, a communication resource identifier, and a communication resource node address;
the AI session information comprises at least one of the following: an AI session identifier, an AI session type, an AI resource identifier, and an AI resource node address;
the network identifier information comprises at least one of the following: a slice identifier and a data network name DNN;
the policy information comprises at least one of the following: an AI policy identifier, a communication policy identifier, a comprehensive policy identifier, and a policy charging function address; and
the release cause comprises at least one of the following: a normal release, a temporary release, and a release due to service resource switching.

41. The method according to any one of claims 37 to 40, wherein the method further comprises:
in a case that the fourth device receives the third release request message sent by the first device, sending, by the fourth device, a tenth release request message to a fifth device, wherein the tenth release request message is used to request to release a communication policy associated with the AI service; and
the tenth release request message comprises at least one of the following: a release requester identifier, a communication policy identifier, a PDU session information, a network resource identifier, an AI session information, an AI service information, a release cause, and a policy information.

42. The method according to claim 41, wherein the method further comprises:
receiving, by the fourth device, a tenth release response message sent by the fifth device, wherein the tenth release response message is used to indicate whether the communication policy associated with the AI service is successfully released; and
in a case that the tenth release response message is used to indicate that the communication policy fails to be released, the tenth release response message comprises a tenth cause value, and the tenth cause value comprises at least one of the following: the communication policy does not exist, and the communication policy is in use and cannot be released.

43. The method according to any one of claims 37 to 42, wherein the method further comprises:
in a case that the fourth device receives the fourth release request message sent by the first device, sending, by the fourth device, a twelfth release request message to the fifth device, wherein the twelfth release request message is used to request to release an AI policy and/or a communication policy associated with the AI service; and
the twelfth release request message comprises at least one of the following: a release requester identifier, a communication policy identifier, an AI policy identifier, a PDU session information, an AI session information, a network resource identifier, an AI service information, a release cause, and a policy information.

44. The method according to any one of claims 37 to 43, wherein the method further comprises:
in the case that the fourth device receives the fourth release request message sent by the first device, sending, by the fourth device, an eleventh release request message to a third device, wherein the eleventh release request message is used to request to release an AI resource allocated to the AI service; and
the eleventh release request message comprises at least one of the following: a release requester identifier, an AI session information, and a PDU session information.

45. The method according to claim 44, wherein the method further comprises:
receiving, by the fourth device, an eleventh release response message sent by the third device, wherein the eleventh release response message is used to indicate whether the AIresource is successfully released; and
in a case that the eleventh release response message is used to indicate that the AIresource fails to be released, the eleventh release response message comprises an eleventh cause value, and the eleventh cause value comprises at least one of the following: the AI resource does not exist, and the AI resource is in use and cannot be released.

46. The method according to any one of claims 37 to 45, wherein the method further comprises:
sending, by the fourth device, the third release response message to the first device, wherein the third release response message is used to indicate whether the communication resource is successfully released; and
in a case that the third release response message is used to indicate that the communication resource fails to be released, the third release response message comprises a third cause value, and the third cause value comprises at least one of the following: the communication resource does not exist, and the communication resource is in use and cannot be released.

47. The method according to any one of claims 37 to 46, wherein the method further comprises:
in a case that the fourth device receives the fourth release request message sent by the first device and the release type is used to indicate to release the AI resource, sending, by the fourth device, the eleventh release request message to the third device; or
in a case that the fourth device receives the fourth release request message sent by the first device and the release type is used to indicate to release all resources, sending, by the fourth device, a thirteenth release request message to a ninth device, and/or sending, by the fourth device, the eleventh release request message to the third device, wherein the thirteenth release request message is used to request to release a communication bearer associated with the AI service.

48. An AI service release method, comprising:
receiving, by a fifth device, a fourth release request message sent by a first device, wherein the fourth release request message is used to request the fifth device to release a service resource associated with an AI service; and
sending, by the fifth device, a fourth release response message to the first device, wherein the fourth release response message is used to indicate whether the fifth device successfully releases the service resource associated with the AI service.

49. The method according to claim 48, wherein
the fourth release request message comprises at least one of the following:
a release requester identifier, an Al service information, a packet data unit PDU session information, an AI session information, a policy information, a network identifier information, a release cause, and a release type.

50. The method according to claim 48 or 49, wherein the method further comprises:
sending, by the fifth device, an eleventh release request message to a third device, wherein the eleventh release request message is used to request to release an AIresource allocated to the AI service; and
the eleventh release request message comprises at least one of the following: a release requester identifier, an AI session information, and a PDU session information.

51. The method according to claim 50, wherein the method further comprises:
receiving, by the fifth device, an eleventh release response message sent by the third device, wherein the eleventh release response message is used to indicate whether the AI resource is successfully released; and
in a case that the eleventh release response message is used to indicate that the AI resource fails to be released, the eleventh release response message comprises an eleventh cause value, and the eleventh cause value comprises at least one of the following: the AI resource does not exist, and the AI resource is in use and cannot be released.

52. The method according to any one of claims 48 to 51, wherein the method further comprises:
sending, by the fifth device, a fourteenth release request message to a fourth device, wherein the fourteenth release request message is used to request to release a communication resource associated with the AI service; and
the fourteenth release request message comprises at least one of the following: a release requester identifier, a PDU session information, an AI session information, an AI service information, a network identifier information, a communication management function address, a release cause, and a policy information.

53. The method according to claim 52, wherein the method further comprises:
receiving, by the fifth device, a fourteenth release response message sent by the fourth device, wherein the fourteenth release response message is used to indicate whether the communication resource is successfully released; and
in a case that the fourteenth release response message is used to indicate that the communication resource fails to be released, the fourteenth release response message comprises a fourteenth cause value, and the fourteenth cause value comprises at least one of the following: the communication resource does not exist, and the communication resource is in use and cannot be released.

54. The method according to any one of claims 49 to 53, wherein the release requester identifier comprises at least one of the following: a terminal identifier, and a network device identifier;
the AI service information comprises at least one of the following: an AI service identifier, an AI service description, a model subscription correlation identifier, and a model identifier;
the PDU session information comprises at least one of the following: a PDU session identifier, a PDU session type, a communication resource identifier, and a communication resource node address;
the AI session information comprises at least one of the following: an AI session identifier, an AI session type, an AI resource identifier, and an AI resource node address;
the policy information comprises at least one of the following: an AI policy identifier, a communication policy identifier, a comprehensive policy identifier, and a policy charging function address;
the network identifier information comprises at least one of the following: a slice identifier and a data network name DNN;
the release cause comprises at least one of the following: a normal release, a temporary release, and a release due to service resource switching; and
the release type comprises at least one of the following: a releasing a communication resource, a releasing an AI resource, and a releasing all resources.

55. An AI service release method, comprising:
receiving, by a seventh device, a seventh release request message sent by a third device, wherein the seventh release request message is used to request to release an AI resource allocated to an AI service, and the seventh release request message comprises at least one of the following: an AI resource management function address, an AI session information, and an AI service information; and
sending, by the seventh device, a seventh release response message to the third device, wherein the seventh release response message is used to indicate whether the AI resource is successfully released.

56. The method according to claim 55, wherein in a case that the seventh release response message is used to indicate that the AI resource fails to be released, the seventh release response message comprises a seventh cause value, and the seventh cause value comprises at least one of the following: the AI resource does not exist, and the AI resource is in use and cannot be released.

57. The method according to claim 55 or 56, wherein the method further comprises:
sending, by the seventh device, a fifteenth release request message to an eighth device, wherein the fifteenth release request message is used to request to release an AI bearer associated with the AI service; and
the fifteenth release request message comprises at least one of the following: an AI resource node address, an AI session information, and an AI service information.

58. The method according to claim 57, wherein the method further comprises:
receiving, by the seventh device, a fifteenth release response message sent by the eighth device, wherein the fifteenth release response message is used to indicate whether the AI bearer is successfully released; and
in a case that the fifteenth release response message is used to indicate that the AI bearer fails to be released, the fifteenth release response message comprises a fifteenth cause value, and the fifteenth cause value comprises at least one of the following: the AI bearer does not exist, and the AI bearer is in use and cannot be released.

59. An AI service release apparatus, comprising:
a receiving module, configured to receive a first release request message sent by a second device, wherein the first release request message is used to request to release a service resource associated with an artificial intelligence AI service;
a sending module, configured to send a first release response message to the second device, wherein the first release response message is used to indicate whether the service resource associated with the AI service is successfully released; and
an execution module, configured to perform at least one of the following operations based on the first release request message:
determining at least one of a third device, a fourth device, and a fifth device associated with the AI service;
sending a second release request message to the third device, wherein the second release request message is used to request to release an AI resource allocated to the AI service;
sending a third release request message to the fourth device, wherein the third release request message is used to request to release a communication resource allocated to the AI service; and
sending a fourth release request message to the third device, the fourth device, or the fifth device, wherein the fourth release request message is used to request the third device, the fourth device, or the fifth device to release the service resource associated with the AI service.

60. An AI service release apparatus, comprising:
a sending module, configured to send a first release request message to a first device, wherein the first release request message is used to request to release a service resource associated with an AI service; and
a receiving module, configured to receive a first release response message sent by the first device, wherein the first release response message is used to indicate whether the service resource associated with the AI service is successfully released.

61. An AI service release apparatus, comprising:
a receiving module, configured to receive a second release request message sent by a first device, wherein the second release request message is used to request a third device to release an AI resource allocated to an AI service; and
a sending module, configured to send a second release response message to the first device, wherein the second release response message is used to indicate whether the AI resource is successfully released;
or
the receiving module, configured to receive a fourth release request message sent by a first device, wherein the fourth release request message is used to request a third device to release a service resource associated with an AI service; and
the sending module, configured to send a fourth release response message to the first device, wherein the fourth release response message is used to indicate whether the third device successfully releases the service resource associated with the AI service.

62. An AI service release apparatus, comprising:
a receiving module, configured to receive a third release request message sent by a first device, wherein the third release request message is used by a fourth device to release a communication resource allocated to an AI service; and
a sending module, configured to send a third release response message to the first device, wherein the third release response message is used to indicate whether the communication resource is successfully released;
or
the receiving module, configured to receive a fourth release request message sent by a first device, wherein the fourth release request message is used to request a fourth device to release a service resource associated with an AI service; and
the sending module, configured to send a fourth release response message to the first device, wherein the fourth release response message is used to indicate whether the fourth device successfully releases the service resource associated with the AI service.

63. An AI service release apparatus, comprising:
a receiving module, configured to receive a fourth release request message sent by a first device, wherein the fourth release request message is used to request a fifth device to release a service resource associated with the AI service; and
a sending module, configured to send a fourth release response message to the first device, wherein the fourth release response message is used to indicate whether the fifth device successfully releases the service resource associated with the AI service.

64. An AI service release apparatus, comprising:
a receiving module, configured to receive a seventh release request message sent by a third device, wherein the seventh release request message is used to request to release an AIresource allocated to an AI service, and the seventh release request message comprises at least one of the following: an AI resource management function address, an AI session information, and an AI service information; and
a sending module, configured to send a seventh release response message to the third device, wherein the seventh release response message is used to indicate whether the AIresource is successfully released.

65. A first device, comprising a processor and a memory, wherein the memory stores a program or instructions capable of being run on the processor, and when the program or the instructions are executed by the processor, the steps of the AI service release method according to any one of claims 1 to 12 are implemented.

66. A second device, comprising a processor and a memory, wherein the memory stores a program or instructions capable of being run on the processor, and when the program or the instructions are executed by the processor, the steps of the AI service release method according to any one of claims 13 to 18 are implemented.

67. A third device, comprising a processor and a memory, wherein the memory stores a program or instructions capable of being run on the processor, and when the program or the instructions are executed by the processor, the steps of the AI service release method according to any one of claims 19 to 36 are implemented.

68. A fourth device, comprising a processor and a memory, wherein the memory stores a program or instructions capable of being run on the processor, and when the program or the instructions are executed by the processor, the steps of the AI service release method according to any one of claims 37 to 47 are implemented.

69. A fifth device, comprising a processor and a memory, wherein the memory stores a program or instructions capable of being run on the processor, and when the program or the instructions are executed by the processor, the steps of the AI service release method according to any one of claims 48 to 54 are implemented.

70. A seventh device, comprising a processor and a memory, wherein the memory stores a program or instructions capable of being run on the processor, and when the program or the instructions are executed by the processor, the steps of the AI service release method according to any one of claims 55 to 58 are implemented.

71. A readable storage medium, wherein the readable storage medium stores a program or instructions, and when the program or the instructions are executed by a processor, the AI service release method according to any one of claims 1 to 12 is implemented, or the steps of the AI service release method according to any one of claims 13 to 18 are implemented, or the steps of the AI service release method according to any one of claims 19 to 36 are implemented, or the steps of the AI service release method according to any one of claims 37 to 47 are implemented, or the steps of the AI service release method according to any one of claims 48 to 54 are implemented, or the steps of the AI service release method according to any one of claims 55 to 58 are implemented.

72. A computer program product, wherein the computer program product is stored in a storage medium, and the computer program product is executed by at least one processor, to implement the AI service release method according to any one of claims 1 to 12, or the AI service release method according to any one of claims 13 to 18, or the AI service release method according to any one of claims 19 to 36, or the AI service release method according to any one of claims 37 to 47, or the AI service release method according to any one of claims 48 to 54, or the AI service release method according to any one of claims 55 to 58.

73. A chip, wherein the chip comprises a processor and a communication interface, the communication interface is coupled to the processor, and the processor is configured to run a program or instructions, to implement the AI service release method according to any one of claims 1 to 12, or the AI service release method according to any one of claims 13 to 18, or the AI service release method according to any one of claims 19 to 36, or the AI service release method according to any one of claims 37 to 47, or the AI service release method according to any one of claims 48 to 54, or the AI service release method according to any one of claims 55 to 58.
